(19) Europäisches Patentamt
European Patent Office
Office européen des brevets

(11) EP 4 439 735 B1

(12) EUROPEAN PATENT SPECIFICATION

(45) Date of publication and mention of the grant of the patent:
**22.04.2026 Bulletin 2026/17**

(21) Application number: **24166303.8**

(22) Date of filing: **26.03.2024**

(51) International Patent Classification (IPC):
***H01M 4/62*** *(2006.01)* ***H01M 10/052*** *(2010.01)*
***H01M 10/0585*** *(2010.01)* ***H01M 50/193*** *(2021.01)*
*H01M 50/105* *(2021.01)*

(52) Cooperative Patent Classification (CPC):
**H01M 4/622; H01M 10/052; H01M 10/0585; H01M 50/193;** H01M 50/105; Y02E 60/10; Y02P 70/50

(54) **LITHIUM BATTERY INCLUDING MODIFIED POLYOLEFIN BINDER**

LITHIUMBATTERIE MIT MODIFIZIERTEM POLYOLEFINBINDEMITTEL

BATTERIE AU LITHIUM COMPRENANT UN LIANT DE POLYOLÉFINE MODIFIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.03.2023 KR 20230039383**
**28.08.2023 KR 20230113191**

(43) Date of publication of application:
**02.10.2024 Bulletin 2024/40**

(73) Proprietor: **Samsung SDI Co., Ltd.**
**Yongin-si, Gyeonggi-do 17084 (KR)**

(72) Inventors:
- **SEINO, Hiroshi**
  **17084 Yongin-si, Gyeonggi-do (KR)**
- **AHN, Jeongchull**
  **17084 Yongin-si, Gyeonggi-do (KR)**
- **KIM, Sanghyun**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**JP-A- 2014 197 541**
**KR-A- 20200 005 037**
**US-A1- 2004 045 597**
**US-A1- 2016 237 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 439 735 B1

## Description

## BACKGROUND

1. Field

Embodiments relate to a lithium battery including a modified polyolefin binder.

2. Description of the Related Art

A secondary battery may be generally configured by accommodating an electrode assembly and an electrolyte in a battery case, and installing a cap plate on the battery case. Electrode tabs, cathode terminals, and the like, may be connected to the electrode assembly, and these components may be exposed or protruded to the outside through the cap plate. An electrode assembly of a secondary battery may be configured as a jelly-roll type by winding a laminate of a cathode plate, an anode plate, and a separator, or may be configured as a stack-type by stacking a plurality of cathode plates, anode plates, and separators.

US 2004/045597 A1 discloses a lithium battery according to the preamble of claim 1 adhesive layer includes an adhesive including a maleated polypropylene with various melting points.

US 2016/237311 A1 discloses maleimide-terminated polyimide based and adhesives that may also present as polypropylene compounds as such.

JP 2014 197541 A discloses a lithium battery comprising a separator with a maleimide-modified polyolefin.

KR 2020 0005037 A disclose an adhesive composition comprising a maleimide-modified polyolefin according to claim 1 as such. The composition is used as photoresist composition for OLEDs.

SUMMARY

The invention is defined by the appended claims. The description that follows is subjected to this limitation. Any disclosure lying outside the scope of said claims is only intended for illustrative as well as comparative purposes. According to the invention, there is provided a lithium battery including an electrode assembly including a cathode, an anode, and a separator between the cathode and the anode; a battery case surrounding the electrode assembly; and an adhesive layer between the electrode assembly and the battery case, the adhesive layer attaching the electrode assembly and the battery case to each other, wherein the adhesive layer includes an adhesive including a maleimide-modified polyolefin containing two or more acid functional groups.

An electrolyte absorption amount of the adhesive may be 30 wt% or less.

The maleimide-modified polyolefin containing two or more acid functional groups may have a weight average molecular weight (Mw) of 10,000 g/mol or more.

The maleimide-modified polyolefin containing two or more acid functional groups may have a melting point ($T_m$) of 130 °C or less.

The maleimide-modified polyolefin containing two or more acid functional groups may be a reaction product between an amine compound containing two or more acid functional groups and an α,β-unsaturated dicarboxylic acid anhydride-modified polyolefin.

A maleimide in the maleimide-modified polyolefin containing two or more acid functional groups may be a product of a dehydration reaction between an amine compound containing two or more acid functional groups and an (e.g., α,β-unsaturated) dicarboxylic acid anhydride-modified polyolefin.

An (α,β-unsaturated) dicarboxylic acid in the (e.g., α,β-unsaturated) dicarboxylic acid anhydride-modified polyolefin may include anhydrous maleic acid.

A modified polyolefin in the (e.g., α,β-unsaturated) dicarboxylic acid anhydride-modified polyolefin may include a polyethylene or a polypropylene.

A content of polyolefin in the (e.g., α,β-unsaturated) dicarboxylic acid anhydride-modified polyolefin may be 50 mol% or more.

A content of (e.g., α,β-unsaturated) dicarboxylic acid anhydride in the (e.g., α,β-unsaturated) dicarboxylic acid anhydride-modified polyolefin may be 50 mol% or less.

The amine compound containing two or more acid functional groups may be represented by Formula 1:

Formula 1

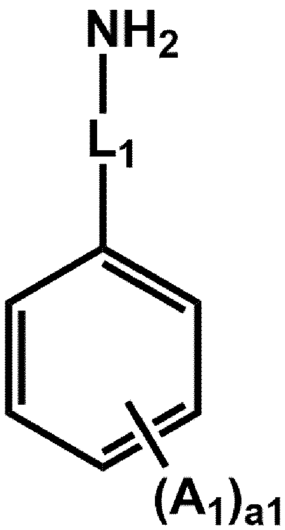

in Formula 1, $L_1$ may be a $C_1$-$C_{20}$ alkylene group, a $C_2$-$C_{20}$ alkeynylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, $A_1$ may be a carboxylic acid group, a sulfonic acid group, or a phosphorus acid group, and a1 may be an integer of 2 to 5.

The amine compound containing two or more acid functional groups may be represented by one of Formulae 1-1 to 1-6:

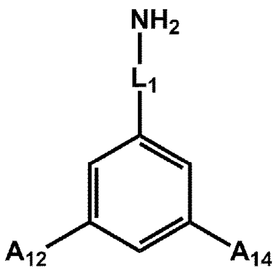

1-1

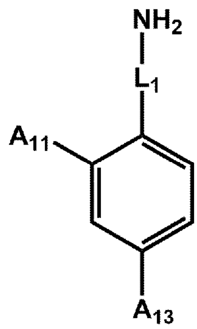

1-2

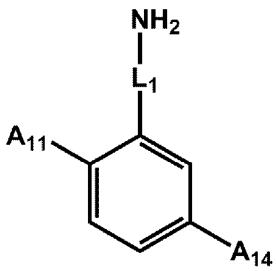

1-3

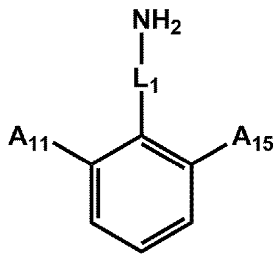

1-4

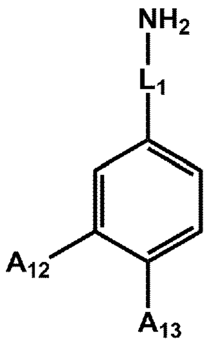

1-5

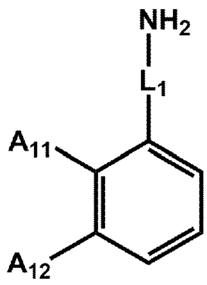

1-6

in Formulae 1-1 to 1-6, Li may be a $C_1$-$C_{20}$ alkylene group, a $C_2$-$C_{20}$ alkeynylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, and $A_{11}$ to $A_{15}$ may be each independently a carboxylic acid group, a sulfonic acid group, or a phosphorus acid group.

The amine compound containing two or more acid functional groups may be represented by one of Formulae 1-1 to 1-4.

The adhesive layer may be on at least one surface of an upper surface and a lower surface of the electrode

assembly.

The adhesive layer may be on an entire outer surface of the electrode assembly.

An area on which the adhesive layer is disposed may be 6 % or more with respect to a total area of an outer surface of the electrode assembly.

The adhesive layer may have a thickness of about 1 μm to about 10 μm.

The adhesive layer is on an outer surface of the electrode assembly in the form of a polygonal shape, a circular shape, an oval shape a straight-line, a diagonal curve a zig-zag line; or a combination thereof.

The lithium battery may further include an electrolyte inside the battery case.

The electrolyte may include a liquid electrolyte, a solid electrolyte, or a gel electrolyte.

## BRIEF DESCRIPTION OF THE DRAWINGS

Features will be apparent to those of skill in the art by describing in detail exemplary embodiments with reference to the attached drawings in which:

FIG. 1 is a cross-sectional view of a lithium battery according to embodiments;
FIG. 2 is a cross-sectional view of a lithium battery according to another embodiment;
FIG. 3 is an exploded perspective view of a lithium battery according to embodiments;
FIG. 4 is a perspective view of a lithium battery according to embodiments; and
FIG. 5 is a perspective view of a lithium battery according to embodiments.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "and/or" and "or" are not exclusive terms, and include any and all combinations of one or more of the associated listed items. Expressions such as "at least one of," when preceding a list of elements, modify the entire list of elements and do not modify the individual elements of the list.

An adhesive layer between an electrode assembly and a battery case may include an adhesive including a maleimide-modified polyolefin containing two or more acid functional groups, and adhesive strength between the electrode assembly and the battery case and high-temperature stability may improve. A lithium battery comprising an adhesive including the maleimide-modified polyolefin containing two or more acid functional groups may have improved impact strength and high-temperature stability.

The terminology used hereinbelow is used for the purpose of describing particular embodiments only and is not intended to limit the application. As used herein, the singular forms are intended to include the plural forms as well, unless the context clearly indicates otherwise. As used herein, the terms "comprises" and/or "comprising," or "includes" and/or "including" specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein, "/" may be interpreted as "and", or as "or" depending on the context.

It will be understood that although the terms "first," "second," etc. may be used herein to describe various elements, these elements should not be limited by these terms, e.g., the terms are not intended to imply or require sequential inclusion. These terms are only used to distinguish one element from another element. In the present specification and the drawings, elements that serve substantially the same function are labeled with the same reference numeral and may not be discussed redundantly.

As used herein, the term "particle diameter" of a particle refers to an average particle diameter if the particle is spherical, and for a particle that is non-spherical, said term refers to an average major axis length of the particle. The particle diameter of particles may be measured using a particle size analyzer (PSA). The term "particle diameter" of particles may refer to an average diameter of the particles, for example. The average particle diameter may be, for example, a median particle diameter D50. The median particle diameter D50 refers to a particle size corresponding to a cumulative volume of 50 vol% as counted from the smallest particle size in a particle size distribution measured by a laser

diffraction method.

As used herein, "substituted with a halogen" means that any hydrogen in a polymer is replaced with a halogen or an alkyl group having 1 to 5 carbon atoms substituted with a halogen.

As used herein, "halogen" refers to fluorine, chlorine, bromine, or iodine.

As used herein, the term "metal" refers to both metals and metalloids such as silicon and germanium, in an elemental or ionic state.

As used herein, the term "alloy" means a mixture of two or more metals.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to a cathode active material or an anode active material.

As used herein, the terms "delithiation" and "to delithiate" refer to a process of removing lithium from a cathode active material or an anode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

Hereinbelow, a binder according to embodiments, and an anode and a lithium battery including the same, will be described in greater detail.

FIG. 1 is a cross-sectional view of a lithium battery according to embodiments. FIG. 2 is a cross-sectional view of a lithium battery according to other embodiments.

Referring to FIGS. 1 and 2, a lithium battery 10 includes an electrode assembly 100 including a cathode, an anode, and a separator between the cathode and the anode; a battery case 300 housing the electrode assembly 100; and an adhesive layer 200 between the electrode assembly 100 and the battery case 300 and attaching the electrode assembly 100 and the battery case 300 to each other. The adhesive layer 200 includes an adhesive including a maleimide-modified polyolefin containing two or more acid functional groups. The adhesive layer 200 includes an adhesive including a maleimide-modified polyolefin containing two or more acid functional groups and, due to excellent adhesive properties and high-temperature stability of the maleimide-modified polyolefin containing two or more acid functional groups, a lithium battery 10 including the same may have improved impact strength and high-temperature stability.

Adhesive strength may improve by virtue of two or more acid functional groups included in the maleimide-modified polyolefin. The polyolefin may be modified by maleimide, and high-temperature stability may improve. An adhesive including a maleimide-modified polyolefin containing two or more acid functional groups may have improved adhesive properties and high-temperature stability.

[Adhesive]

An electrolyte absorption amount of the adhesive containing maleimide-modified polyolefin containing two or more acid functional groups may be 30 wt% or less with respect to the total weight of the adhesive. The electrolyte absorption amount of the adhesive may be 25 wt% or less, 20 wt% or less, or 15 wt% or less, with respect to the total weight of the adhesive.

Electrolyte absorption amount refers to the amount of an electrolyte absorbed after an adhesive is completely immersed in the electrolyte and preserved for 1 hour at 80 °C, and is calculated by the Equation below.

Electrolyte absorption amount (wt%) = (Weight of adhesive after immersion in electrolyte - Weight of adhesive before immersion in electrolyte) / (Weight of adhesive before immersion in electrolyte) * 100

The maleimide-modified polyolefin containing two or more acid functional groups may have a weight average molecular weight (Mw) of, e.g., 10,000 g/mol or more. The weight average molecular weight (Mw) may be measured by gel permeation chromatography (GPC) or size-exclusion chromatography (SEC). The maleimide-modified polyolefin containing two or more acid functional groups may have a weight average molecular weight (Mw) of, e.g., about 10,000 g/mol to about 1,000,000 g/mol.

The maleimide-modified polyolefin containing two or more acid functional groups may have a melting point (Tm) of, e.g., 130 °C or less. The melting point (Tm) of the maleimide-modified polyolefin containing two or more acid functional groups may be 100 °C or less, about 40 °C to about 130 °C, or about 40 °C to about 100 °C. The material of a separator may be polyethylene, and the processing temperature may not exceed the melting point of polyethylene (134 °C). If the melting point were to be less than 40 °C, as softening properties deteriorate, the effect of pushing the electrolyte out from between an adhesive and a metal foil may decrease, giving rise to insufficient adhesive strength and causing heat resistance to decrease.

The maleimide-modified polyolefin containing two or more acid functional groups may be a product of reaction between an amine compound containing two or more acid functional groups and an α,β-unsaturated dicarboxylic acid anhydride-modified polyolefin.

A maleimide unit in the maleimide-modified polyolefin containing two or more acid functional groups may be a product of a dehydration reaction between an amine compound containing two or more acid functional groups and an α,β-unsaturated dicarboxylic acid anhydride-modified polyolefin.

A maleimide unit in the maleimide-modified polyolefin containing two or more acid functional groups may be a product of reaction as shown in Reaction 1 between an amine compound containing two or more acid functional groups (see definition of the amine compound below) and a (e.g., α,β-unsaturated) dicarboxylic acid anhydride-modified polyolefin.

Reaction 1

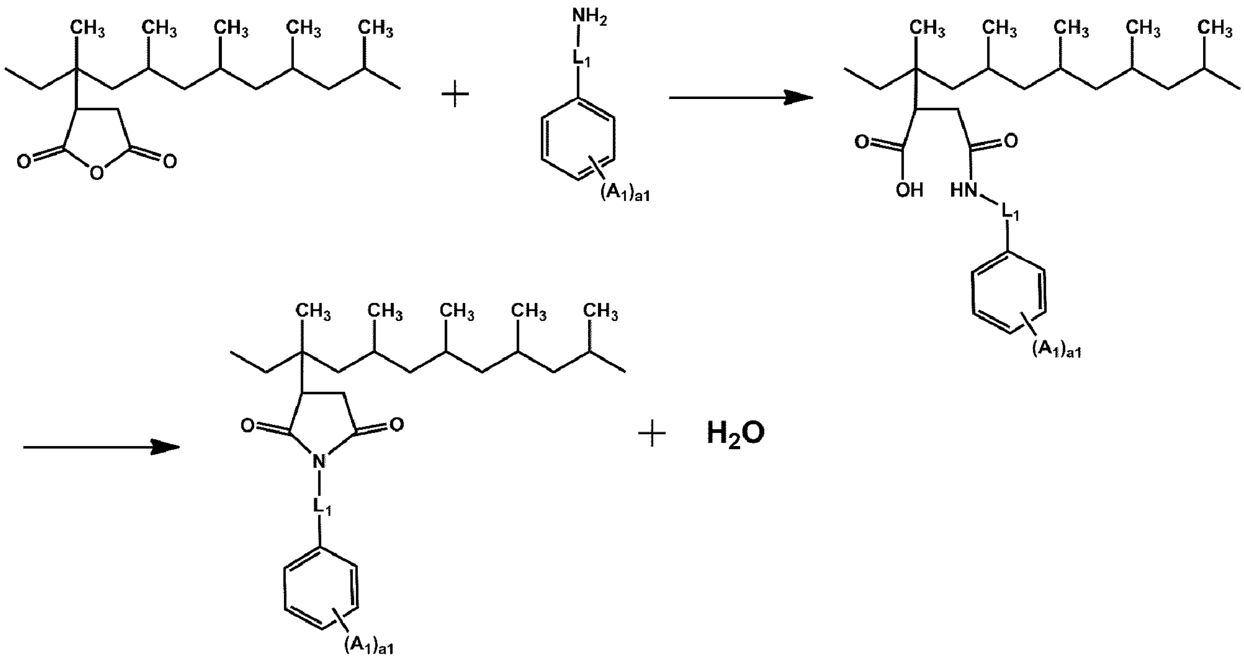

A maleimide in maleimide-modified polyolefin containing two or more acid functional groups may be prepared by a dehydration reaction of an amine group in an amine compound containing two or more acid functional groups with (e.g., α,β-unsaturated) dicarboxylic acid anhydride in a (e.g., α,β-unsaturated) dicarboxylic acid anhydride-modified polyolefin.

The α,β-unsaturated dicarboxylic acid anhydride-modified polyolefin may be produced by grafting polyolefin with a monomer having an α,β-unsaturated dicarboxylic acid anhydride structure. The monomer of α,β-unsaturated dicarboxylic acid anhydride structure may utilize an α,β-unsaturated dicarboxylic acid, an α,β-unsaturated dicarboxylic acid anhydride, an α,β-unsaturated dicarboxylic acid ester, an α,β-unsaturated dicarboxylic acid diester, an α,β-unsaturated dicarboxylic acid derivative with a functional group bound to α,β-unsaturated dicarboxylic acid, an α,β-unsaturated dicarboxylic acid salt, or a mixture thereof.

The monomer of α,β-unsaturated dicarboxylic acid anhydride structure may be a monomer of maleic acid anhydride structure, and maleic acid, a maleic acid anhydride, a maleic acid ester, a maleic acid diester, a maleic acid derivative with a functional group bound to maleic acid, a maleic acid salt, or a mixture thereof may be used as the monomer of maleic acid anhydride structure. Examples of a maleic acid anhydride derivative with a functional group bound to maleic acid anhydride may include 2,3-dimethylmaleic anhydride, phenylmaleic anhydride, and the like.

The α,β-unsaturated dicarboxylic acid anhydride-modified polyolefin may be prepared by grafting a polyolefin with an α,β-unsaturated dicarboxylic acid anhydride. An α,β-unsaturated dicarboxylic acid, an α,β-unsaturated dicarboxylic acid anhydride, an α,β-unsaturated dicarboxylic acid ester, an α,β-unsaturated dicarboxylic acid diester, an α,β-unsaturated dicarboxylic acid derivative with a functional group bound to α,β-unsaturated dicarboxylic acid, or an α,β-unsaturated dicarboxylic acid salt may be used, and the prepared modified polyolefin may be dehydrated by a high-temperature treatment to thereby prepare an α,β-unsaturated dicarboxylic acid anhydride-modified polyolefin.

The α,β-unsaturated dicarboxylic acid anhydride in the α,β-unsaturated dicarboxylic acid anhydride-modified polyolefin may include anhydrous maleic acid.

The modified polyolefin in the α,β-unsaturated dicarboxylic acid anhydride-modified polyolefin may include a polyethylene or a polypropylene.

The type of the α,β-unsaturated dicarboxylic acid anhydride-modified polyolefin may be a random co-polymer or a graft co-polymer, and may be hyper branched or a dendrimer.

The content of polyolefin in the α,β-unsaturated dicarboxylic acid anhydride-modified polyolefin may be 50 mol% or more. The content of polyolefin in the α,β-unsaturated dicarboxylic acid anhydride-modified polyolefin may be 75 mol% or more, or 90 mol% or more.

The content of α,β-unsaturated dicarboxylic acid (e.g. anhydrous maleic acid) in the α,β-unsaturated dicarboxylic acid anhydride-modified polyolefin may be 50 mol% or less. The content of α,β-unsaturated dicarboxylic acid (e.g. anhydrous maleic acid) in the α,β-unsaturated dicarboxylic acid anhydride-modified polyolefin may be 25 mol% or less, 15 mol% or less, or about 5 mol% to about 15 mol%. The content of α,β-unsaturated dicarboxylic acid (e.g. anhydrous maleic acid) may be calculated using $^1$H-NMR, from a ratio of an area corresponding to α,β-unsaturated dicarboxylic acid (e.g. anhydrous maleic acid) in the total area of $^1$H-NMR peaks.

The α,β-unsaturated dicarboxylic acid modified polyolefin may be prepared by copolymerization of polyolefin with a metal adhesive co-monomer or other co-monomers, along with a monomer having α,β-unsaturated dicarboxylic acid structure. Examples of the metal adhesive co-monomer may include acrylic acid, an acrylic acid derivative, e.g., methacrylic acid, vinyl alcohol, an acrylic acid ester derivative containing a hydroxy alkyl group, an acrylic acid ester derivative containing a carboxy alkyl group, or a mixture thereof. In an implementation, examples of the metal adhesive co-monomer may include a polymerizable compound including a carboxyl group (including anhydride structures) or a hydroxy group having metal adhesive properties, an acid component (sulfonic acid, phosphonic acid, etc.), or a functional group (e.g., trimethoxysilyl group) giving rise to a reaction with a metal surface, e.g., silane coupling reaction, or a mixture of such compounds. Other co-monomers may include ethylene, styrene, or a mixture thereof. The other comonomers may be included, and the adhesive resin may have a decreased melting point and improved fluidity.

An acid functional group in the amine compound containing two or more acid functional groups may include carboxylic acid, sulfonic acid, or phosphorus acid. The acid functional group may include carboxylic acid.

The amine compound containing two or more acidic functional groups may be represented by Formula 1.

Formula 1

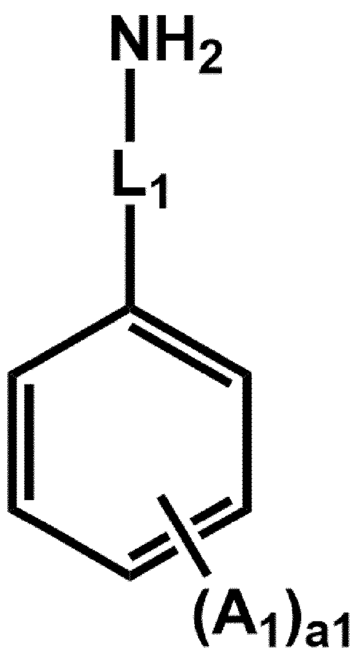

In Formula 1, Li is a $C_1$-$C_{20}$ alkylene group, a $C_2$-$C_{20}$ alkeynylene group, a $C_2$-$C_{20}$ alkynylene group, a $C_3$-$C_{10}$

cycloalkylene group, a $C_3$-$C_{10}$ cycloalkenylene group, or a $C_6$-$C_{30}$ arylene group. $A_1$ is a carboxylic acid group, a sulfonic acid group, or a phosphorus acid group. a1 is an integer of 2 to 5.

In Formula 1, $A_1$ may be a carboxylic acid group.

In Formula 1, a1 may be an integer of 2 to 4, in particular a1 may be 2.

Amine compound containing two or more acid functional groups may be represented by one of Formulae 1-1 to 1-6.

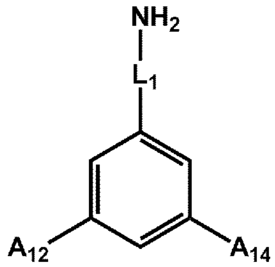

1-1

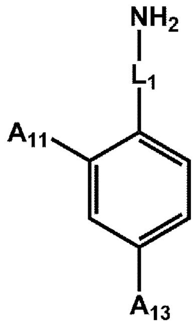

1-2

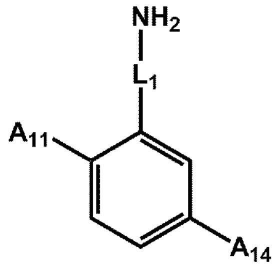

1-3

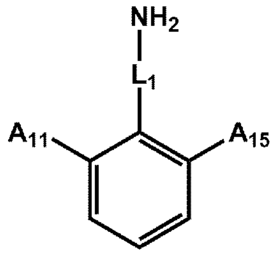

1-4

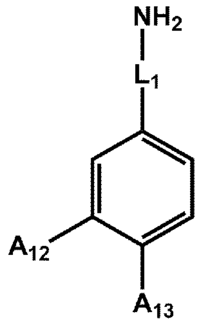

1-5

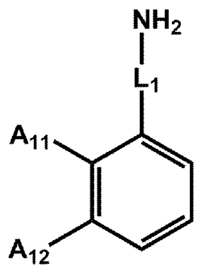

1-6

In Formulae 1-1 to 1-6, $L_1$ is a $C_1$-$C_{20}$ alkylene group, a $C_2$-$C_{20}$ alkeynylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group. $A_{11}$ to $A_{15}$ are each independently a carboxylic acid group, a sulfonic acid group, or a phosphorus acid group. $A_{11}$ to $A_{15}$ each independently may be a carboxylic acid group.

The amine compound containing two or more acid functional groups may be represented by one of Formulae 1-1 to 1-4.

[Adhesive layer 200]

Referring to FIG. 1, the adhesive layer 200 may be on at least one surface of an upper surface and a lower surface of the electrode assembly 100. The adhesive layer 200 may be on an entire upper surface or lower surface of the electrode assembly 100. The adhesive layer 200 may be on an entire upper surface and an entire lower surface of the electrode assembly 100.

Referring to FIG. 2, the adhesive layer 200 may be on an entire outer surface of the electrode assembly 100, e.g., may completely surround the electrode assembly 100.

A disposition area of the adhesive layer 200 may be 6% or more with respect to a total area of the outer surface of the electrode assembly 100. The disposition area of the adhesive layer 200 may be, e.g., 10 % or more, 20 % or more, 30 % or more, 40 % or more, 50 % or more, about 10 % to about 90 %, about 10 % to about 80 %, or about 10 % to about 70 %, with respect to the total area of the outer surface of the electrode assembly 100.

The adhesive layer 200 may have a thickness of about 1 $\mu$m to about 10 $\mu$m. The thickness of the adhesive layer 200 may be, e.g., about 2 $\mu$m to about 10 $\mu$m, about 3 $\mu$m to about 10 $\mu$m, about 4 $\mu$m to about 10 $\mu$m, or about 5 $\mu$m to about 10 $\mu$m.

The adhesive layer 200 may be on an outer surface of the electrode assembly in the form of a polygonal shape, a circular shape, an oval shape a straight-line, a diagonal curve a zig-zag line; or a combination thereof.

The adhesive layer 200 may further include a tackifier or an additive in addition to the adhesive described above. The tackifier may include a rosin tackifier. Examples of the additive may include cross-linking agents, metal surface modifiers (silane coupling agents, acid derivatives such as phosphoric acid compounds (zirconium phosphate, titanium phosphate), and derivatives of metal oxide compounds such as titanic acid and chromic acid derivatives). The above additive may be a single type or may be used as a mixture of two or more types.

[Electrode assembly]

The electrode assembly 100 according to embodiments includes an electrode assembly including a cathode, an anode, and a separator between the cathode and the anode. In an implementation, once an anode and a cathode are prepared, a separator may be disposed between the cathode and the anode to prepare an electrode assembly.

[Anode]

The anode according to embodiments may include an anode current collector; and an anode active material layer on the anode current collector. The anode active material layer may include an anode active material, a binder, and a conductive material.

An anode for a lithium battery according to embodiments may include an anode current collector; and an electrodeposing induction layer on one side of the anode current collector. An anode for a lithium battery according to embodiments may include an anode current collector; an electrodeposing induction layer on the anode current collector; and an anode active material layer on the electrodeposing induction layer.

[Anode: Anode current collector]

Materials constituting the anode current collector may include a suitable conductive material that does not react with lithium, e.g., a conductive material that does not form an alloy or a compound with lithium. The anode current collector may include, e.g., a metal or an alloy. The anode current collector may be formed of, e.g., indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The anode current collector may include, e.g., a first metal substrate. The first metal substrate may include a first metal as a main component or may be made of a first metal. The first metal substrate may include a first metal as a main component or may be made of a first metal. The content of the first metal included in the first metal substrate may be, e.g., 90 wt% or more, 95 wt% or more, 99 wt% or more, or 99.9 wt% or more with respect to a total weight of the first metal substrate. The first metal substrate may be composed of a material that does not react with lithium, e.g., a material that does not form an alloy and/or a compound with lithium.

The first metal may be, e.g., copper (Cu), nickel (Ni), stainless steel (SUS), iron (Fe), cobalt (Co), or another suitable material for a current collector. The first metal substrate may be made of, e.g., a single type of the aforementioned metals, or an alloy of two or more metals thereof. The first metal substrate may be, e.g., a sheet type or a foil type. The thickness of the anode current collector 21 may be, e.g., about 5 $\mu$m to about 50 $\mu$m, about 10 $\mu$m to about 50 $\mu$m, about 10 $\mu$m to about 40 $\mu$m, about 10 $\mu$m to about 30 $\mu$m, or may be selected depending on a feature of a lithium battery.

The anode current collector may further include a coating layer containing a second metal on the first metal substrate.

The anode current collector may include, e.g., a first metal substrate; and a coating layer on the first metal substrate and containing a second metal. The second metal may have a higher Mohs hardness compared to the first metal. The coating layer containing the second metal may be harder than the substrate containing the first metal, and deterioration of the first metal substrate may be prevented. The Mohs hardness of a material constituting the first metal substrate may be, e.g., 6.0 or less. The Mohs hardness of the first metal may be, e.g., 5.5 or less, 5.0 or less, 4.5 or less, 4.0 or less, 3.5 or less, or 3.0 or less. The Mohs hardness of the first metal may be, e.g., about 2.0 to about 6.0. The coating layer may include a second metal. The coating layer may include a second metal as a main component, or may be formed of a second metal. The content of the second metal included in the coating layer may be, e.g., 90 wt% or more, 95 wt% or more, 99 wt% or more, or 99.9 wt% or more, with respect to the total weight of the coating layer. The coating layer may be composed of a material that does not react with lithium, for example, a material that does not form an alloy and/or a compound with lithium. The Mohs hardness of a material constituting the coating layer may be, e.g., 6.0 or more. The Mohs hardness of the second metal may be 6.0 or more, 6.5 or more, 7.0 or more, 7.5 or more, 8.0 or more, 8.5 or more, or 9.0 or more. The Mohs hardness of the second metal may be, e.g., about 6.0 to about 12. If the Mohs hardness of the second metal were to be too low, it could be difficult to suppress deterioration of the anode current collector. If the Mohs hardness of the second metal were to be too high, processing may be not easy. The second metal may be, e.g., titanium (Ti), manganese (Mn), niobium (Nb), tantalum (Ta), iridium (Ir), vanadium (V), rhenium (Re), osmium (Os), tungsten (W),

chromium (Cr), boron (B), ruthenium (Ru), or rhodium (Rh). The coating layer may be made of, e.g., a single type of the aforementioned metals, or an alloy of two or more metals thereof. The difference in Mohs hardness between the first metal included in the first metal substrate and the second metal included in the coating layer may be, e.g., 2 or more, 2.5 or more, 3 or more, 3.5 or more, or 4 or more. The difference in Mohs hardness between the first metal and the second metal may be within the above ranges, and deterioration of the anode current collector may be more effectively suppressed. The coating layer may have a single-layer structure or a multi-layer structure having two or more layers. The coating layer may have a two-layer structure including a first coating layer and a second coating layer. The coating layer may have a three-layer structure having a first coating layer, a second coating layer, and a third coating layer. The thickness of the coating layer may be, e.g., about 10 nm to about 1 μm, about 50 nm to about 500 nm, about 50 nm to about 200 nm, or about 50 nm to about 150 nm. If the thickness of the coating layer were to be too thin, it could be difficult to suppress uneven growth of a lithium-containing metal layer. As the thickness of the coating layer increases, the cycling performance of the lithium battery may improve. If the thickness of the coating layer were to be excessively large, the energy density of the lithium battery could deteriorate, and formation of the coating layer could be difficult. The coating layer may be formed on the first metal substrate by a method such as a vacuum deposition method, a sputtering method, or a plating method. A suitable method that is capable of providing a coating layer may be used.

The anode current collector may have a reduced thickness relative to other anode current collectors included in electrodes. The anode disclosed herein, by including a thin-film current collector, e.g., may be distinguished from another electrode that includes a thick-film current collector. As an electrode according to one or more embodiments may employ a thin-film current collector having a reduced thickness, the thickness of a lithium electrodeposed layer in the anode including the thin-film current collector may relatively increase. As a result, a lithium battery employing the electrode may have increased energy density. The anode current collector 21 may have a thickness of 15 μm or less, 14.5 μm or less, or 14 μm or less. The thickness of the anode current collector may be about 0.1 μm to about 15 μm, about 1 μm to about 14.5 μm, about 2 μm to about 14 μm, about 3 μm to about 14 μm, about 5 μm to about 14 μm, or about 10 μm to about 14 μm.

The anode current collector may have a form of a sheet, a foil, a film, a plate, a porous structure, a mesoporous structure, a through-hole containing structure, a polygonal ring, a mesh, a foam, a nonwoven structure, or may have another suitable form.

The anode current collector may include a base film and a metal substrate layer on one side or both sides of the base film. The anode current collector may include a substrate, and the substrate may have, e.g., a structure including a base film and a metal substrate layer on one side or both sides of the base film. On the metal substrate layer, an interlayer may be further disposed.

The base film may include, e.g., a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The base film may include a thermoplastic polymer, and the base film may get liquefied in the event of a short circuit, thereby preventing a rapid increase in electric current. For example, the base film may be an insulator. For example, the metal substrate layer may include copper (Cu), stainless steel, titanium (Ti), iron (Fe), cobalt (Co), nickel (Ni), or an alloy thereof. In the event of an overcurrent, the metal substrate layer may be disconnected, thus acting as an electrochemical fuse to provide protection against short circuits. A limiting current and a maximum current may be controlled through controlling a thickness of the metal substrate layer. The metal substrate layer may be plated or deposited on the base film. As the thickness of the metal substrate layer decreases, the limiting current and/or maximum current of the anode current collector decrease, which may lead to an improved stability of a lithium battery in case of a short circuit. A lead-tab may be added on the metal substrate layer for connection to the outside. The lead-tab may be welded to the metal substrate layer or a metal substrate layer/base film laminate by ultrasonic welding, laser welding, spot welding, or the like. As the base film and/or the metal substrate layer melt during welding, the metal substrate layer may be electrically connected to the lead-tab. For stronger welding between the metal substrate layer and the lead-tab, a metal chip may be added between the metal substrate layer and the lead-tab. The metal chip may be a flake of the same material as the metal of the metal substrate layer. For example, the metal chip may be a metal foil, a metal mesh, or the like. For example, the metal chip may be an aluminum foil, a copper foil, an SUS foil, or the like. By welding the metal substrate layer with the lead-tab after placing the metal chip on the metal substrate layer, the lead-tab may be welded to a metal chip/metal substrate layer laminate or a metal chip/metal substrate layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal substrate layer. For example, the base film may have a thickness of about 1 μm to about 50 μm, about 1.5 μm to about 50 μm, about 1.5 μm to about 40 μm, or about 1 μm to about 30 μm. With the base film having a thickness within the above ranges, the weight of an anode assembly may be more effectively reduced. The base film may have a melting point of about 100 °C to about 300 °C, about 100 °C to about 250 °C or less, or about 100 °C to about 200 °C. Within the above ranges, the base film may easily melt and be bonded to the lead-tab while welding the lead-tab. To help improve adhesion between the base film and the metal substrate layer, a surface treatment such as corona treatment may be performed on the base film. For example, the metal substrate layer may have a thickness of about 0.01 μm to about 3 μm, about 0.1 μm to about 3 μm,

about 0.1 μm to about 2 μm, or about 0.1 μm to about 1 μm. Within the above ranges, the anode may provide stability while maintaining conductivity. For example, the metal chip may have a thickness of about 2 μm to about 10 μm, about 2 μm to about 7 μm, or about 4 μm to about 6 μm. Within the above ranges, the metal layer and the lead-tab may be more easily connected. With the anode current collector having the above structure, the weight of the electrode may be reduced and as a result, improve in energy density.

[Anode: Anode active material layer]

The anode may include an anode active material layer on the anode current collector, and the anode active material layer may include an anode active material, a conductive material, and a binder. For example, the anode active material layer may be prepared using an anode active material composition obtained by mixing an anode active material, a conductor, a binder, and a solvent, and the anode active material composition may be directly coated on an anode current collector to thereby prepare an anode plate. In another embodiment, the prepared anode active material composition may be cast on a separate support, and an anode active material film exfoliated from the support may be laminated on an anode current collector to thereby prepare an anode plate.

The anode active material may include a suitable material for an anode active material in a lithium battery. For example, the anode active material may include lithium metal, a metal alloyable with lithium, a transition metal oxide, a non-transition metal oxide, or a carbonaceous material.

Examples of the metal alloyable with lithium may include Si, Sn, Al, Ge, Pb, Bi, Sb, a Si-Y alloy (wherein Y is an alkali metal, an alkaline earth metal, an element of Group 13, an element of Group 14, a transition metal, a rare earth metal, or a combination thereof, but not Si), a Sn-Y alloy (wherein Y is an alkali metal, an alkaline earth metal, an element of Group 13, an element of Group 14, a transition metal, a rare earth metal, or a combination thereof, but not Sn) and the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The transition metal oxide may be, for example, a lithium titanium oxide, a vanadium oxide, a lithium vanadium oxide, or the like.

The non-transition metal oxide may be, for example, $SnO_2$, $SiO_x$ ($0<x<2$), or the like.

The carbonaceous material may be, for example, a crystalline carbon, an amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like.

The amounts of the anode active material, the conductor, the binder, and the solvent may be at a level suitably used in lithium batteries. Depending on the use and configuration of the lithium battery, one or more of the conductive material, the binder, and the solvent may be omitted.

[Anode: Electrodeposing induction layer]

An anode may include an electrodeposing induction layer on an anode current collector. The electrodeposing induction layer may include a lithiophilic metal and a carbonaceous material. For example, the lithiophilic metal may include silver (Ag) or gold (Au). For example, the carbonaceous material may include Denka Black and the like. For example, lithium metal may be plated on the electrodeposing induction layer.

According to embodiments, the electrodeposing induction layer may have a thickness of about 1 μm to about 10 μm. The thickness of the electrodeposing induction layer may be, for example, about 1 μm to about 8 μm, about 1 μm to about 6 μm, about 1 μm to about 5 μm, about 1.5 μm to about 10 μm, about 2 μm to about 10 μm, or about 2 μm to about 5 μm. With the electrodeposing induction layer having a thickness within the above ranges, the internal resistance of the anode may be effectively reduced, and at the same time, formation and/or growth of lithium dendrites may be effectively prevented. For example, the cycling performance of a lithium battery including the electrodeposing induction layer may further improve. If the thickness of the electrodeposing induction layer excessively increases, the internal resistance of a lithium battery may increase. If the thickness of the electrodeposing induction layer is excessively decreased, the electrodeposing induction effect of the electrodeposing induction layer may be insignificant.

According to one or more embodiments, the electrodeposing induction layer may further include a binder.

For example, the binder may be a non-conductive binder or a conductive binder. The conductive binder may be, for example, an ionically conductive binder, an electronically conductive binder, or a combination thereof.

Other binders, other than the above-described binders may include, e.g., polystyrene sulfonate (PSS), a polyvinylidene fluoride-hexafluoropropylene copolymer (PVDF-HFP), polyvinylidene fluoride-hexafluoropropylene), polyvinyl fluoride (PVF), polyvinylidene fluoride (PVDF), poly(meth)acrylic acid, poly(meth)acrylate, poly(methylmethacrylate) (PMMA), polyethylene oxide (PEO), polyethylene glycol (PEG), polyacrylonitrile (PAN), an acrylonitrile-styrene-butadiene copolymer, polytetrafluoroethylene (PTFE), polyethylene dioxythiophene (PEDOT), polypyrrole (PPY), polyaniline, polyacetylene, polytetrafluoroethylene (PTFE), styrene-butadiene rubber (SBR), polyimide (PI), polyamidoimide (PAI), carboxymethylcellulose (CMC), polyvinyl chloride (PVC), polyacrylonitrile. (PAN), modified polyphenylene oxide (PPO), polyethylene (PE), polypropylene (PP), and the like. The ionically conductive binder may include polar functional groups. Examples of the ionically conductive binder containing polar functional groups may include Nafion™, Aquivion®, Flemion®, Gore™, Aciplex™, Morgane® ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and the like. Examples of the electronically conductive binder may include polyacetylene, polythiophene, polypyrrole, poly(p-phenylene), poly(phenylenevinylene), poly(phenylenesulfide), polyaniline, and the like.

The binder other than the binder described above may be, for example, an acryl-based binder or a fluorine-based binder. The fluorine-based binder included in the electrodeposing induction layer may be, for example, polyvinylidene fluoride (PVDF), polytetrafluoroethylene (PTFE), and polyvinylidene fluoride-hexafluoropropylene copolymer (PVDF-HFP), fluoride-hexafluoropropylene, or the like. For example, the acryl-based binder including the electrodeposing induction layer may be poly(meth)acrylic acid, poly(meth)acrylate, polymethyl(meth)acrylate, polyacrylonitrile, an acrylonitrile-styrene-butadiene copolymer, or the like.

According to embodiments, the content of the binder may be, for example, about 3 wt% to about 20 wt%, about 3 wt% to about 15 wt%, about 3 wt% to about 10 wt%, about 3 wt% to about 7 wt%, or about 4 wt% to about 7 wt% with respect to a total weight of the electrodeposing induction layer.

According to embodiments, the electrodeposing induction layer may further include a conductive material.

The conductive material may include carbon black, acetylene black, Ketchen black, carbon nanotubes, carbon nanofibers, carbon nanobelts, graphene, graphene oxide, fullerene, activated carbon, carbon fibers, or a combination thereof.

According to embodiments, the electrodeposing induction layer may be prepared by curing an electrodeposing induction layer-providing composition containing the lithiophilic metal and the carbonaceous material. The electrodeposing induction layer-providing composition may further include the binder described above or the conductive agent described above. The electrodeposing induction layer may be provided, for example, by having the electrodeposing induction layer-providing composition applied on an anode current collector, and then cured at a temperature of 100 °C or more.

The electrodeposing induction layer may be provided, for example, by having the electrodeposing induction layer-providing composition applied on an anode current collector, and then thermally treated at a temperature of 100 °C or more, for about 1 hour to about 10 hours. An electrodeposing induction layer may be provided, for example, by having the electrodeposing induction layer-providing composition applied on an anode current collector, and then thermally treated at a temperature of 160 °C or more, for about 1 hour to about 10 hours.

[Anode: Lithium electrodeposed layer]

The anode may include an anode current collector; the electrodeposing induction layer disposed on the anode current collector; and a lithium electrodeposed layer disposed on the electrodeposing induction layer, wherein the lithium electrodeposed layer may include lithium metal or a lithium alloy.

The lithium electrodeposed layer may be formed by lithium metal is plated on the electrodeposing induction layer upon charging after the anode is introduced, along with a cathode and an electrolyte, into a lithium battery. The lithium electrodeposed layer may include, for example, lithium metal or a lithium alloy.

For example, the lithium alloy may be an alloy of lithium with another metal alloyable with lithium, and may include, for example, a lithium-silver alloy, a lithium-zinc alloy, a lithium-magnesium alloy, a lithium-tin alloy, and the like.

According to embodiments, the lithium electrodeposed layer may include a spherical lithium metal or a spherical lithium alloy.

According to embodiments, the average particle diameter (D50) of the spherical lithium metal or lithium alloy may be about 0.1 μm to about 15 μm, about 0.1 μm to about 12 μm, about 0.1 μm to about 10 μm, about 1 μm to about 15 μm, about 2 μm to about 15 μm, about 3 μm to about 15 μm, or about 3 μm to about 10 μm.

For example, the thickness of the lithium electrodeposed layer may be, for example, 50 μm or less, 40 μm or less, 35 μm or less, 30 μm or less, about 1 μm to about 50 μm, about 1 μm to about 40 μm, about 5 μm to about 40 μm, about 1 μm to about 35 μm, or about 10 μm to about 35 μm. For example, if the thickness of the lithium electrodeposed layer satisfies the above ranges, the energy density of a lithium battery may further improve.

According to embodiments, the thickness of the lithium electrodeposed layer if fully charged, may be 35 μm or less, 30 μm or less, 28 μm or less, about 10 μm to about 35 μm, about 10 μm to about 30 μm, and about 10 μm to about 28 μm.

[Anode: Anode interlayer]

The anode may optionally further include an anode interlayer disposed between the anode current collector and the electrodeposing induction layer. The anode may further include an anode interlayer, and the formation and/or growth of lithium dendrites at the anode may be more effectively suppressed. The anode interlayer may be omitted.

The anode interlayer may include, for example, an anode active material and a binder. The anode active material may be an anode material that can be lithiated and delithiated. The anode active material included in the anode interlayer may have, for example, a particle form. For example, the anode active material having a particle form may have an average particle diameter of about 10 nm to about 4 μm, about 10 nm to about 1 μm, about 10 nm to about 500 nm, about 10 nm to about 100 nm, or about 20 nm to about 80 nm. Within the above ranges, reversible plating and/or dissolution of lithium during charging/discharging may be further facilitated. The average particle diameter of the anode active material may be, for example, a median particle diameter (D50) as measured by a laser-type particle size distribution analyzer.

The anode active material included in the anode interlayer may include, for example, one or more selected from among a carbonaceous anode active material and a metal or metalloid anode active material. The carbonaceous anode active material may be amorphous carbon, for example. Examples of the carbonaceous anode active material may include carbon black (CB), acetylene black (AB), furnace black (FB), Ketjen black (KB), graphene, or the like; or other suitable material categorized as amorphous carbon. Amorphous carbon is carbon with no crystalline structure or an extremely low degree of crystallinity and as such, may be distinguished from crystalline carbon or graphitic carbon. The metal or metalloid anode active material may include at least one selected from gold (Au), platinum (Pt), palladium (Pd), silicon (Si), silver (Ag), aluminum (Al), bismuth (Bi), tin (Sn), and zinc (Zn). The metal or metalloid anode active material may be a suitable metal anode active material or metalloid anode active material that can form an alloy or a compound with lithium. For example, since nickel (Ni) does not form an alloy with lithium, nickel is not regarded as a metal anode active material herein. Among such anode active materials, the anode interlayer may include a single anode active material or may include a mixture of multiple different anode active materials. For example, the anode interlayer may include a mixture of amorphous carbon with at least one metal selected from gold (Au), platinum (Pt), palladium (Pd), silicon (Si), silver (Ag), aluminum (Al), bismuth (Bi), tin (Sn), and zinc (Zn). The mixing ratio of amorphous carbon and at least one metal in the mixture may be in weight ratio, for example, about 10:1 to about 1:2, about 10:1 to about 1:1, about 7:1 to about 1:1, about 5:1 to about 1:1, or about 4:1 to about 2:1. The anode active material included in the anode interlayer may include, for example, a mixture of first particles composed of amorphous carbon, and second particles composed of a metal or a metalloid. Examples of the metal may include gold (Au), platinum (Pt), palladium (Pd), silicon (Si), silver (Ag), aluminum (Al), bismuth (Bi), tin (Sn), zinc (Zn), and the like. The content of the second particles may be about 8 wt% to about 60 wt%, about 10 wt% to about 50 wt%, about 15 wt% to about 40 wt%, or about 20 wt% to about 30 wt%, with respect to the total weight of the mixture. As the second particles are included in an amount in the above ranges, for example, cycling performance of the lithium battery may be further improved.

Examples of the binder included in the anode interlayer may include styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, or the like; or other suitable binder. The binder may be composed of a single type of binder, or multiple binders of different types. If the anode interlayer does not include binders, the anode interlayer may be easily separated from the anode current collector. The amount of the binder included in the anode interlayer may be, for example, about 1 wt% to about 20 wt% with respect to the total weight of the anode interlayer.

A thickness of the anode interlayer may be, for example, about 1 μm to about 20 μm, about 1 μm to about 15 μm, about 2 μm to about 10 μm, or about 3 μm to about 7 μm. A thickness of the anode interlayer may be, for example, about 1 % to about 50 %, about 1 % to about 30 %, about 1 % to about 10 %, or about 1 % to about 5 %, with respect to a thickness of the anode active material layer. If the thickness of the anode interlayer is excessively thin, lithium dendrites formed between the anode interlayer and the anode current collector may cause the anode interlayer to collapse, making it difficult to improve cycling performance of the lithium battery. If the thickness of the anode interlayer is excessively increased, the lithium battery employing the anode may have a decreased energy density, and the cycling performance may be difficult to improve. If the thickness of the anode interlayer decreases, for example, charge capacity of the anode interlayer may also decrease. The charge capacity of the anode interlayer may be, for example, about 0.1 % to about 50 %, about 1 % to about 30 %, about 1 % to about 10 %, about 1 % to about 5 %, or about 1 % to about 2 % with respect to a charge capacity. If the charge capacity of the anode interlayer is excessively small, lithium dendrites formed between the anode interlayer and the anode current collector may cause the anode interlayer to collapse, making it difficult to improve cycling performance of the lithium battery. If the charge capacity of the anode interlayer is excessively increased, the energy density of a lithium battery employing the anode may deteriorate and improvement of cycling performance may become difficult. Charge capacity of a cathode active material layer may be obtained by multiplying the charge capacity density (mAh/g) of a cathode active material by the mass of the cathode active material in the cathode active material layer. If multiple types of cathode active materials are used, the product of charge capacity density × mass may be calculated for each cathode active material, and the sum of these products may be defined as the charge capacity of the cathode active material layer.

Charge capacity of an anode interlayer may be obtained in the same manner described with respect to the cathode active material layer above. Charge capacity of an anode interlayer may be then obtained by multiplying the charge capacity density (mAh/g) of an anode active material by the mass of the anode interlayer in the anode active material layer. If multiple types of anode active materials are used, the product of charge capacity density × mass may be calculated for each anode active material, and the sum of these products may be defined as charge capacity of the anode interlayer. The charge specific density of the cathode active material and the anode active material are capacities estimated using an all-solid half cell that uses lithium metal as counter electrode. By charge capacity measurement using a solid-state half cell, charge capacities of the cathode active material layer and the anode interlayer may be directly measured. Charge specific density may be obtained by dividing the measured charge capacity by the mass of each active material. In some embodiments, charge capacities of the cathode active material layer and the anode interlayer may be an initial charge capacity measured during charging in the first cycle.

[Anode: Lithium metal layer]

According to another embodiment, the anode may further include a lithium metal layer containing lithium metal or a lithium alloy, disposed between the anode current collector and the electrodeposing induction layer.

The lithium metal layer may include, for example, a lithium foil, lithium powder, plated lithium, or a combination thereof. The anode active material layer including a lithium foil may be, for example, a lithium metal layer. An anode active material layer containing lithium powder may be introduced by coating a slurry containing lithium powder, a binder, etc. onto an anode current collector. The binder may be, for example, a fluorine-based binder such as polyvinylidene fluoride (PVDF). The anode active material layer may be free of carbon-based anode active materials.

[Cathode]

According to one implementation, the cathode may include a cathode active material, a conductive material, and a binder. For example, a cathode active material, a conductive material, a binder, and a solvent may be mixed together to prepare a cathode active material composition, and a cathode may be prepared by directly coating and drying the prepared cathode active material composition on an aluminum current collector. In some embodiments, a film obtained by casting the cathode active material composition on a separate support and then separating the composition from the support may be laminated on the aluminum current collector to form a cathode plate provided with a cathode active material layer.

The cathode active material may be a lithium-containing metal oxide, and may utilize a suitable lithium-containing metal oxide. For example, at least one of the composite oxides of lithium and a metal selected from cobalt, manganese, nickel, and a combination thereof may be utilized as the lithium-containing metal oxide. For example, the lithium-containing metal oxide may be represented by any one of the following formulae: $Li_aA_{1-b}B_bD_2$ (in the formula, $0.90 \leq a \leq 1$ and $0 \leq b \leq 0.5$); $Li_aE_{1-b}B_bO_{2-c}D_c$ (in the formula, $0.90 \leq a \leq 1$, $0 \leq b \leq 0.5$, and $0 \leq c \leq 0.05$); $LiE_{2-b}B_bO_{4-c}D_c$ (in the formula, $0 \leq b \leq 0.5$ and $0 \leq c \leq 0.05$); $Li_aNi_{1-b-c}Co_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_bE_cG_dO_2$ (in the formula, $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (in the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1$ and $0.001 \leq b \leq 0.1$); $Li_aCoG_bO_2$ (in the formula, $0.90 \leq a \leq 1$ and $0.001 \leq b \leq 0.1$); $Li_aMnG_bO_2$ (in the formula, $0.90 \leq a \leq 1$ and $0.001 \leq b \leq 0.1$); $Li_aMn_2G_bO_4$ (in the formula, $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the formulae representing the above-described compounds, A may be nickel (Ni), cobalt (Co), manganese (Mn), or a combination thereof; B may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be Co, Mn, or a combination thereof; F may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I may be Cr, V, Fe, Sc, yttrium (Y), or a combination thereof; and J may be V, Cr, Mn, Co, Ni, copper (Cu), or a combination thereof. A compound having a coating layer added on a surface of the above compound may also be used. Furthermore, a mixture of the above compound with a compound having a coating layer added thereon may also be used. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. A compound providing the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method of providing

the coating layer may be selected within a range that does not adversely affect physical properties of a cathode active material. Examples of coating method may include spray coating, dip coating, and the like.

For example, the cathode active material may be $Li_aNi_xCo_yM_zO_{2-b}A_b$ (1.0≤a≤1.2, 0≤b≤0.2, 0.8≤x<1, 0<y≤0.3, 0<z≤0.3, and x+y+z=1, M is manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is fluoride (F), sulfur (S), chloride (Cl), bromide (Br), or a combination thereof), $LiNi_xCo_yMn_zO_2$ (0.8≤x≤0.95, 0≤y≤0.2, 0<z≤0.2, and x+y+z=1), $LiNi_xCo_yAl_zO_2$ (0.8≤x≤0.95, 0≤y≤0.2, 0<z≤0.2, and x+y+z=1), $LiNi_xCo_yMn_zAl_wO_2$ (0.8≤x≤0.95, 0≤y≤0.2, 0<z≤0.2, 0<w≤0.2, and x+y+z+w=1), $Li_aCo_xM_yO_{2-b}A_b$ (1.0≤a≤1.2, 0≤b≤0.2, 0.9≤x≤1, 0≤y≤0.1, and x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is fluoride (F), sulfur (S), chloride (Cl), bromide (Br), or a combination thereof), $Li_aNi_xMn_yM'_zO_{2-b}A_b$ (1.0≤a≤1.2, 0≤b≤0.2, 0<x≤0.3, 0.5≤y<1, 0<z≤0.3, and x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is fluoride (F), sulfur (S), chloride (Cl), bromide (Br), or a combination thereof), $Li_aM1_xM2_yPO_{4-b}X_b$ (in Formula, 0.90≤a≤1.1, 0≤x≤0.9, 0≤y≤0.5, 0.9<x+y<1.1, and 0≤b≤2, M1 is chromium (Cr), manganese (Mn), iron (Fe), cobalt (Co), nickel (Ni), copper (Cu), zirconium (Zr), or a combination thereof, and M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, M1 and M2 may be the same metal or different metal, and X is O, F, S, P, or a combination thereof), or $Li_aM3_zPO_4$ (0.90≤a≤1.1 and 0.9≤z≤1.1, and M3 is chromium (Cr), manganese (Mn), iron (Fe), cobalt (Co), nickel (Ni), copper (Cu), zirconium (Zr), or a combination thereof).

As the conductive material, carbon black, graphite fine particles, natural graphite, artificial graphite, acetylene black, Ketjen black, carbon fiber; carbon nanotubes; metal powder, metal fiber or metal tube (such as copper, nickel, aluminum, and silver); or conductive polymers (such as polyphenylene derivatives) may be utilized. Any conductive material available in the art may be utilized. In some embodiments, the cathode may not contain any conductive material, for example.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized. Any suitable binder in the art may be utilized. As the solvent, N-methylpyrrolidone (NMP), acetone, water, or other suitable solvent may be utilized.

It is also possible to form pores in the electrode plate by further adding a plasticizer or a pore former to the cathode active material composition.

The amount of each of the cathode active material, the conductive material, the binder, and the solvent used in the cathode may be at a level commonly used in a lithium battery. Depending on the use and configuration of the lithium battery, one or more of the conductive material, the binder, and the solvent may be omitted.

The amount of the binder included in the cathode may be about 0.1 wt% to about 10 wt%, or about 0.1 wt% to about 5 wt%, relative to the total weight of the cathode active material layer. The amount of the cathode active material included in the cathode may be about 80 wt% to about 99 wt%, about 90 wt% to about 99 wt%, or about 95 wt% to about 99 wt%, with respect to the total weight of the cathode active material layer.

[Separator]

According to embodiments, a separator may be between the cathode and the anode.

The separator may be a suitable separator used in lithium batteries. For example, the separator may be a separator capable of retaining a large quantity of electrolyte solution, while exhibiting low resistance to ion migration in electrolyte. For example, the separator may be formed of a material selected from among glass fiber, polyester, Teflon, polyethylene, polypropylene, polytetrafluoroethylene (PTFE), or a combination thereof that is in the form of non-woven fabric or woven fabric. A lithium ion battery may utilize, for example, a rollable separator formed of polyethylene, polypropylene, or the like. A lithium-ion polymer battery may utilize, for example, a separator capable of retaining a large quantity of organic electrolyte.

The separator may be prepared by the method described below as an example. However, the method by which to prepare the separator may be adjusted according to conditions required.

First, a separator composition may be prepared by mixing a polymer resin, a filler, and a solvent. The separator composition may be directly coated and dried on an electrode to thereby form a separator. In some embodiments, the separator may be formed by casting and drying the separator composition on a support, and then laminating a separator film exfoliated from the support onto an electrode.

The polymer used in the preparation of the separator may utilize a suitable polymer available for use in a binder of an electrode plate. In one or more embodiments, the polymer may utilize a vinylidene fluoride/hexafluoropropylene

copolymer, polyvinylidene fluoride (PVDF), polyacrylonitrile, polymethyl methacrylate, or a mixture thereof.

[Battery case 300]

According to embodiments, the electrode assembly 100 may be inside a battery case 300. According to embodiments, the adhesive described above applied onto an outer surface of the electrode assembly 100 before being positioned inside the battery case 300.

According to embodiments, the battery case 300 may be a pouch type, a prismatic type, or a cylindrical type.

According to embodiments, the battery case 300 may include a polyolefin resin or a metal. The polyolefin resin may include a polypropylene resin or a polyethylene resin. The metal may include aluminum or an aluminum alloy.

[Electrolyte]

According to embodiments, the lithium battery 10 may further include an electrolyte injected into the battery case 300.

The electrolyte may be, e.g., a liquid electrolyte, a solid electrolyte, a gel electrolyte, or a combination thereof.

The electrolyte may be, e.g., an organic electrolyte. The organic electrolyte may be prepared, e.g., by dissolving a lithium salt in an organic solvent.

For the organic solvent, a suitable organic solvent may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

For the lithium salt, a suitable lithium salt may be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \le x \le 20$ and $1 \le y \le 20$), LiCl, LiI, or a mixture thereof. The concentration of the lithium salt may be, e.g., about 0.1 M to about 5.0 M.

Examples of the solid electrolyte may include an oxide solid electrolyte, a sulfide solid electrolyte, a polymer solid electrolyte, or a combination thereof.

The solid electrolyte may be, e.g., an oxide solid electrolyte. The oxide solid electrolyte may include $Li_{1+x+y}Al_xTi_{2-x}Si_yP_{3-y}O_{12}$ ($0<x<2$ and $0 \le y<3$), $BaTiO_3$, $Pb(Zr,Ti)O_3$ (PZT), $Pb_{1-x}La_xZr_{1-y}Ti_yO_3$ (PLZT) ($0 \le x<1$ and $0 \le y<1$), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0 \le x \le 1$ and $0 \le y \le 1$), $Li_xLa_yTiO_3$ ($0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$ (M = Te, Nb, or Zr, and x is an integer of 1 to 10). The solid electrolyte may be prepared by a sintering method or the like. The oxide solid electrolyte may be a garnet-type solid electrolyte, e.g., $Li_7La_3Zr_2O_{12}$ (LLZO) or $Li_{3+x}La_3Zr_{2-a}M_aO_{12}$ (M-doped LLZO wherein M=Ga, W, Nb, Ta, or Al, and x is an integer of 1 to 10, $0<a<2$).

Examples of the sulfide solid electrolyte may include lithium sulfide, silicon sulfide, phosphorus sulfide, boron sulfide, or a combination thereof. Sulfide solid electrolyte particles may include $Li_2S$, $P_2S_5$, $SiS_2$, $GeS_2$, $B_2S_3$, or a combination thereof. The sulfide solid electrolyte particles may be $Li_2S$ or $P_2S_5$. The sulfide solid electrolyte particles may have a higher lithium ion conductivity than that of other inorganic compounds. The sulfide solid electrolyte may include $Li_2S$ and $P_2S_5$. If sulfide solid electrolyte materials constituting the sulfide-based solid electrolyte include $Li_2S$-$P_2S_5$, a mixing molar ratio of $Li_2S$ and $P_2S_5$ may be, e.g., in a range of about 50:50 to about 90:10. An inorganic solid electrolyte prepared by adding a material such as $Li_3PO_4$, a halogen, a halogen compound, $Li_{2+2x}Zn_{1-x}GeO_4$ ("LISICON", $0 \le x<1$), $Li_{3+y}PO_{4-x}N_x$ ("LIPON", $0<x<4$ and $0<y<3$), $Li_{3.25}Ge_{0.25}P_{0.75}S_4$ ("Thio-LISICON"), and $Li_2O$-$Al_2O_3$-$TiO_2$-$P_2O_5$ ("LATP") to an inorganic solid electrolyte of $Li_2S$-$P_2S_5$, $SiS_2$, $GeS_2$, $B_2S_3$, or a combination thereof, may be used as a sulfide solid electrolyte. Examples of the sulfide solid electrolyte materials may include $Li_2S$-$P_2S_5$; $Li_2S$-$P_2S_5$-LiX (X=a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ ($0<m<10$, $0<n<10$, Z=Ge, Zn or Ga); $Li_2S$-$GeS_2$; $Li_2S$-$SiS_2$-$Li_3PO_4$; and $Li_2S$-$SiS_2$-$Li_pMO_q$ ($0<p<10$, $0<q<10$, M=P, Si, Ge, B, Al, Ga or In). In this regard, the sulfide solid electrolyte material may be prepared by subjecting a starting material (e.g., $Li_2S$, $P_2S_5$, etc.) of the sulfide solid electrolyte material to a treatment such as a melt quenching method, a mechanical milling method, and the like. A calcination process may be performed following the above treatment. The sulfide solid electrolyte may be amorphous or crystalline, or may be in a mixed state thereof.

The polymer solid electrolyte may be an electrolyte that includes a mixture of a lithium salt and a polymer, or includes a polymer having an ion-conducting functional group. The polymer solid electrolyte may be a polymer electrolyte not containing liquid electrolyte. A polymer included in the polymer solid electrolyte may be polyethylene oxide (PEO),

polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. The lithium salt may be a suitable lithium salt, e.g., $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each an integer of 1 to 20), LiCl, LiI, or a mixture thereof.

The gel electrolyte may be a gel polymer electrolyte. The polymer gel electrolyte may be an electrolyte that includes a liquid electrolyte and a polymer, or includes an organic solvent and a polymer having an ion-conducting functional group. The liquid electrolyte may be, for example, an ionic liquid, a mixture of a lithium salt and an organic solvent, a mixture of an ionic liquid and an organic solvent, or a mixture of lithium salt, an ionic liquid, and an organic solvent. The polymer may be selected from polymers used in solid polymer electrolytes. The organic solvent may be selected from organic solvents used in liquid electrolytes. The lithium salt may be selected from lithium salts used in solid polymer electrolytes. The ionic liquid may refer to a room-temperature molten salt or a salt that is in a liquid state at room temperature, which consists of ions alone and has a melting point of room temperature or less. For example, the ionic liquid may be at least one selected from compounds containing: a) at least one cation selected from ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may form a gel polymer electrolyte by being impregnated in an electrolyte solution in a lithium battery. The gel electrolyte may further include inorganic particles.

(Lithium Battery)

The lithium battery may be a lithium primary battery, a lithium secondary battery, a lithium-sulfur battery, a lithium-air battery, or other suitable lithium battery.

The lithium battery may be prepared by the method described below as an example; or may be adjusted according to conditions required.

Referring to FIG. 3, a lithium battery 1 according to embodiments may include a cathode 3, the above-described anode 2, and a separator 4. The cathode 3, the anode 2, and the separator 4 may be wound or folded to form an electrode structure 7 (see FIGS. 4 and 5). The electrode structure 7 may be accommodated in the battery case 5. The battery case 5 may be injected with an organic electrolyte and sealed by a cap assembly 6, thereby completing the preparation of the lithium battery 1. The battery case 5 may be a cylindrical type, or may be a prismatic type, a thin-film type, or the like.

The adhesive described above may be applied onto the electrode assembly 7 to form an adhesive layer, and then inserted into the battery case 5. Then, the battery case 5 may be injected with an electrolyte and sealed by a cap assembly 6, thereby completing the preparation of the lithium battery 1.

Referring to FIG. 4, a lithium battery 1 according to embodiments may include a cathode 3, the above-described anode 2, and a separator 4. The separator 4 may be between the cathode 3 and the anode 2, and the cathode 3, the anode 2, and the separator 4 may be wound to form a electrode assembly 7. The electrode assembly 7 may be accommodated in the battery case 5. An electrode tab 8, acting as an electrical path for guiding an electrical current generated in the electrode assembly 7 to the outside, may be included. The battery case 5 may be injected with an electrolyte and sealed to thereby complete the preparation of the lithium battery 1. The battery case 5 may be a prismatic type, or may also be, for example, a cylindrical type, a thin-film type, or the like.

The adhesive described above may be applied onto the electrode assembly 7 to form an adhesive layer, and then inserted into the battery case 5. Then, the battery case 5 may be injected with an organic electrolyte and sealed to thereby complete the preparation of the lithium battery 1.

Referring to FIG. 5, a lithium battery 1 according to embodiments may include a cathode 3, the above-described anode 2, and a separator 4. The separator 4 may be between the cathode 3 and the anode 2 to form an electrode assembly. The electrode assembly 7 may be stacked in a bi-cell structure and then accommodated into the battery case 5. An electrode tab 8, acting as an electrical path for guiding an electrical current generated in the electrode assembly 7 to the outside, may be included. The battery case 5 may be injected with an electrolyte and sealed to thereby complete the preparation of the lithium battery 1. The battery case 5 may have a polyhedronal shape, or may also have a cylindrical shape, a thin-film shape, or the like.

The adhesive described above may be applied onto the electrode assembly 7 to form an adhesive layer, and then

inserted into the battery case 5. Then, the battery case 5 may be injected with an organic electrolyte and sealed to thereby complete the preparation of the lithium battery 1.

A pouch-type lithium battery corresponds to the lithium battery shown in FIGS. 4 and 5 that uses a pouch as a battery case. The pouch-type lithium battery may include one or more electrode assemblies. The electrode assembly may be formed by disposing a separator between a cathode and an anode. The electrode assemblies may be stacked in a bi-cell structure, and immersed in an organic electrolyte, and then accommodated and sealed in a pouch, thereby completing the preparation of a pouch-type lithium battery. The cathode, the anode, and the separator described above may be simply stacked in the form of an electrode assembly and then accommodated in a pouch, or may be wound or folded into a jelly roll-type electrode assembly and then accommodated in a pouch. Subsequently, the pouch may be injected with an organic electrolyte and then sealed, thereby completing the preparation of a lithium battery.

The lithium battery, due to having excellent lifespan characteristics and high-rate capability, may be used in, e.g., an electric vehicle (EV). The lithium battery may be used in a hybrid vehicle, such as a plug-in hybrid electric vehicle (PHEV) and the like. The lithium battery may be used in a field that requires a large amount of energy storage. The lithium battery may be used in an electric bicycle, a power tool, and the like.

Multiple units of the lithium battery may be stacked together to form a battery module, and multiple units of the battery module may form a battery pack. Such a battery pack may be utilized in all types of devices in which high capacity and high output are required. The battery pack may be used in a laptop computer, a smartphone, an electric vehicle, or the like. The battery module may include, e.g., a plurality of batteries and a frame holding the batteries. The battery pack may include, e.g., a plurality of battery modules and a bus bar connecting these battery modules. The battery module or the battery pack may further include a cooling device. A plurality of battery packs may be controlled by a battery management system. The battery management system may include a battery pack, and a battery control device connected to the battery pack.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

(Preparation of Adhesive)

Preparation Example 1: Modified polypropylene containing 5 mol% anhydrous maleic acid and 5-aminoisophthalic acid

Anhydrous maleic acid-modified polypropylene containing maleic acid anhydride (i.e. a maleic anhydride grafted polypropylene obtained by grafting maleic anhydride onto a polyolefin backbone) was purchased as a commercially available resin (Mitsui Chemicals).

A portion of anhydrous maleic acid was hydrolyzed to maleic acid during storage of the resin, and maleic acid structures formed anhydrous maleic acid structures by a heat treatment at 120 °C for 24 hours, to prepare a modified polypropylene containing 5 mol% of anhydrous maleic acid.

The content of anhydrous maleic acid included in the modified polypropylene containing anhydrous maleic acid was calculated from a peak at 0.7-0.8 ppm and a peak at 2.3-2.7 ppm on a spectrum obtained for $^1$H-NMR measurement. On the spectrum, the peak at 0.7-0.8 ppm corresponds to methyl groups ($-CH_3$) in polypropylene, and the peak at 2.3-2.7 ppm corresponds to methylene groups ($-CH_2-$) derived from anhydrous maleic acid structures graft-polymerized on PP. The areas under the peak at 0.7-0.8 ppm and the peak at 2.3-2.7 ppm above the baseline, respectively, were calculated, and from the ratio of the areas, the copolymerization ratio of anhydrous maleic acid was calculated. The area of methyl groups is A, the area of methylene groups is B, the content of anhydrous maleic acid in molar ratio (mol%) was calculated from 2B/3A*100, and the anhydrous maleic acid content of the modified polypropylene containing anhydrous maleic acid was 5 mol%.

With respect to 1 part by weight of the 5 mol% anhydrous maleic acid-containing modified polypropylene, 30 parts by weight of methyl-cyclohexane as dehydrated solvent were added and stirred under reflux at 100 °C to dissolve resin, and then 0.05 part by weight of 5-aminoisophthalic acid was added thereto and stirred for 3 hours.

Upon completion of the reaction, from the reaction solution, a solid maleimide-modified polyolefin was isolated in ethyl alcohol.

Preparation Example 2: Modified polypropylene containing 3 mol% anhydrous maleic acid and 5-aminoisophthalic acid

An adhesive was prepared following the same process as in Preparation Example 1, except that unlike in

Preparation Example 1, the anhydrous maleic acid-modified polypropylene containing 3 mol% of anhydrous maleic acid, obtained through heat-treating 1 mol% anhydrous maleic acid until the content of anhydrous maleic acid became 3 mol%, was used.

The content of anhydrous maleic acid in the anhydrous maleic acid-containing modified polypropylene was 3 mol% calculated using peak area ratios on $^1$H-NMR spectrum.

Preparation Example 3: Modified polypropylene containing 2 mol% anhydrous maleic acid and 5-aminoisophthalic acid

An adhesive was prepared following the same process as in Preparation Example 1, except that unlike in Preparation Example 1, the anhydrous maleic acid-modified polypropylene containing 2 mol% of anhydrous maleic acid, obtained through heat-treating 1 mol% anhydrous maleic acid until the content of anhydrous maleic acid became 2 mol%, was used.

The content of anhydrous maleic acid in the anhydrous maleic acid-containing modified polypropylene was 2 mol% calculated using peak area ratios on $^1$H-NMR spectrum.

Preparation Example 4: Modified polypropylene containing 9 mol% anhydrous maleic acid and 5-aminoisophthalic acid

An adhesive was prepared following the same process as in Preparation Example 1, except that unlike in Preparation Example 1, the anhydrous maleic acid-modified polypropylene containing 9 mol% of anhydrous maleic acid, obtained through heat-treating 1 mol% anhydrous maleic acid until the content of anhydrous maleic acid became 9 mol%, was used.

The content of anhydrous maleic acid in the anhydrous maleic acid-containing modified polypropylene was 9 mol% calculated using peak area ratios on $^1$H-NMR spectrum.

Preparation Example 5: Modified polypropylene containing 5 mol% anhydrous maleic acid and 4-aminoisophthalic acid

An adhesive was prepared following the same process as in Preparation Example 1, except that 4-aminoisophthalic acid was used instead of 5-aminoisophthalic acid as in Preparation Example 1.

Preparation Example 6: Modified polypropylene containing 5 mol% anhydrous maleic acid and 5-(4-aminophenoxy)-isophthalic acid

An adhesive was prepared following the same process as in Preparation Example 1, except that 5-(4-aminophenoxy)-isophthalic acid was used instead of 5-aminoisophthalic acid as in Preparation Example 1.

Preparation Example 7: Modified polypropylene containing 5 mol% anhydrous maleic acid and 5-amino-1,3-phenylenediacetic acid

An adhesive was prepared following the same process as in Preparation Example 1, except that 5-amino-1,3-phenylenediacetic acid was used instead of 5-aminoisophthalic acid as in Preparation Example 1.

Preparation Example 8: Modified polypropylene containing 5 mol% anhydrous maleic acid and 5-(4-aminophenoxy)-1,3-phenylenedisulfonic acid

An adhesive was prepared following the same process as in Preparation Example 1, except that 5-(4-aminophenoxy)-1,3-phenylenedisulfonic acid was used instead of 5-aminoisophthalic acid as in Preparation Example 1.

Preparation Example 9: Modified polypropylene containing 5 mol% anhydrous maleic acid and 5-amino-m-xylylenediphosphonic acid

An adhesive was prepared following the same process as in Preparation Example 1, except that 5-amino-m-xylylenediphosphonic acid was used instead of 5-aminoisophthalic acid as in Preparation Example 1.

Comparative Preparation Example 1: Polypropylene

Polypropylene by Prime Polymer Co., Ltd. was prepared as an adhesive.

Comparative Preparation Example 2: Modified polypropylene containing 5 mol% anhydrous maleic acid

A polypropylene modified by anhydrous maleic acid was prepared as an adhesive. The content of anhydrous maleic acid was 5 mol% calculated using peak area ratios on $^1$H-NMR spectrum.

Evaluation Example 1: Measurement of weight average molecular weight (g/mol) and melting point (°C) of adhesive

The average molecular weights of the resins according to Preparation Examples 1 to 9 and Comparative Preparation Examples 1 and 2 were measured through gel weight permeation chromatography. The measurement results are shown in Table 1.

Further, the melting points of the resins according to Preparation Examples 1 to 9 and Comparative Preparation Examples 1 and 2 were measured using differential scanning calorimetry (DSC).

The temperature was raised at a rate of 10 °C/min in a nitrogen atmosphere, and cooled, and then raised again at a rate of 10 °C/min. Endothermic peak values during the second temperature elevation were measured as melting points and are shown in Table 1 below.

[Table 1]

| Item | Adhesive | | | Weight-average molecular weight (g/mol) | Melting point (°C) |
|---|---|---|---|---|---|
| | Anhydrous maleic acid-modified olefin | | Amine compounds | | |
| | Olefins | Content of anhydrous maleic acid (mol%) | | | |
| Preparation Example 1 | PP | 5 | 5-amino isophthalic acid | 340,000 | 82 |
| Preparation Example 2 | PP | 2 | 5-amino isophthalic acid | 300,000 | 121 |
| Preparation Example 3 | PP | 3 | 5-amino isophthalic acid | 320,000 | 103 |
| Preparation Example 4 | PP | 9 | 5-amino isophthalic acid | 350,000 | 50 |
| Preparation Example 5 | PP | 5 | 4-amino isophthalic acid | 330,000 | 74 |
| Preparation Example 6 | PP | 5 | 5-(4-aminophenoxy)-isophthalic acid | 370,000 | 88 |
| Preparation Example 7 | PP | 5 | 5-amino-1,3-phenylenediacetic acid | 390,000 | 75 |
| Preparation Example 8 | PP | 5 | 5-(4-aminophenoxy)-1,3-phenylenedisulfon ic acid | 390,000 | 87 |
| Preparation Example 9 | PP | 5 | 5-amino-m-xylylenediphosph onic acid | 390,000 | 85 |
| Comparative Preparation Example 1 | PP | 0 | - | 700,000 | 165 |
| Comparative Preparation Example 2 | PP | 5 | - | 290,000 | 62 |

(Preparation of Anode and Lithium Battery)

Example 1: Adhesive according to Preparation Example 1

(Preparation of Lithium Battery)

A cathode composition was obtained by mixing $LiNi_{0.6}Co_{0.2}Al_{0.2}O_2$, a conductive material (Super-P; Timcal Ltd.), a binder (PVdF; Solvay), and N-methylpyrrolidone. The cathode composition was coated on top of an aluminum foil (thickness: about 10 μm) and dried at 50 °C, and then, the dried product was dried in a vacuum at about 120 °C to prepare a cathode.

An electrode assembly was prepared by placing a polypropylene separator (Celgard 3510, 20 μm) between the cathode obtained above and a 10 μm-thick copper (Cu) current collector.

The adhesive according to Preparation Example 1 was applied to an outer surface of the electrode assembly to form a 10 μm-thick adhesive layer. The adhesive-coated electrode assembly was inserted into an aluminum battery case and injected with an electrolyte, to prepare a lithium battery.

A 1.15 M $LiPF_6$ solution in ethylene carbonate (EC) + ethyl methyl carbonate (EMC) + dimethyl carbonate (DMC) (2:4:4 volume ratio) was used as the electrolyte.

Example 2 to Example 13 and Comparative Examples 1 and 2

Lithium batteries were prepared following the same process as Example 1, except that the types of adhesives and additives included in the adhesive layers were changed as shown in Table 2 below.

[Table 2]

| Item | Adhesive | Tackifier | Additive |
|---|---|---|---|
| Example 1 | Preparation Example 1 | - | - |
| Example 2 | Preparation Example 2 | - | - |
| Example 3 | Preparation Example 3 | - | - |
| Example 4 | Preparation Example 4 | - | - |
| Example 5 | Preparation Example 5 | - | - |
| Example 6 | Preparation Example 6 | - | - |
| Example 7 | Preparation Example 7 | - | - |
| Example 8 | Preparation Example 8 | - | - |
| Example 9 | Preparation Example 9 | - | - |
| Example 10 | Preparation Example 1 | Rosin Tackifier | - |
| Example 11 | Preparation Example 1 | - | Silane coupling agent |
| Example 12 | Preparation Example 1 | Rosin Tackifier | Silane coupling agent |
| Example 13 | Preparation Example 1 | - | Titanium phosphate |
| Comparative Example 1 | Comparative Preparation Example 1 | - | - |
| Comparative Example 2 | Comparative Preparation Example 2 | - | - |

Evaluation Example 2: Evaluation of Adhesive Strength

The adhesive strength of the adhesive layers according to Examples 1 to 13 and Comparative Examples 1 and 2 was measured according to ISO 527-3 standard testing method.

A sample, which was stacked such that the thickness of the adhesive layer between the electrode assembly and the battery case is 10 μm, was prepared to have a width of 15 mm. A tension test was carried out at a rate of 300 mm/min while keeping the distance between chucking jigs at 50 mm. Adhesive strength was calculated from an average value of tensile strength of sections with the adhesives, and is shown in Table 3.

Evaluation Example 3: Evaluation of High-Temperature Stability

The lithium batteries prepared in Examples 1 to 13 and Comparative Examples 1 and 2 were each charged at a constant current of 0.1 C rate at 45 °C until the battery voltage reached 4.3 V (vs. Li), and while maintaining 4.3 V, charged under a constant voltage until the current reached 0.05 C. The lithium battery upon completion of charging was preserved

for 30 days at 60 °C and relative humidity 90 %.

Then, the adhesive strength was measured following the same process as Evaluation Example 1 above, according to ISO 527-3 standard testing method. The measurement results are shown in Table 3.

Evaluation Example 4: Fall Test Evaluation

According to IEC 62133 method (1.5 m, 1 cycle 18 times, 4 cycles), a fall test (abuse testing) was performed for each battery of the Examples and Comparative Examples. The result was deemed as OK if there was no generation of smoke, no combustion, no decrease in OCV, and 50 mV or less after 120 hours.

The fall test was conducted 10 times in total, and the number of falls that were deemed OK is shown in Table 3.

[Table 3]

| | Initial adhesion | Adhesive strength after high-temperature preservation | Initial fall test pass rate |
|---|---|---|---|
| Example 1 | 920 | 815 | 10/10 |
| Example 2 | 745 | 580 | 10/10 |
| Example 3 | 815 | 660 | 10/10 |
| Example 4 | 1125 | 920 | 10/10 |
| Example 5 | 830 | 670 | 10/10 |
| Example 6 | 950 | 795 | 10/10 |
| Example 7 | 1010 | 865 | 10/10 |
| Example 8 | 780 | 600 | 10/10 |
| Example 9 | 975 | 860 | 10/10 |
| Example 10 | 950 | 835 | 10/10 |
| Example 11 | 965 | 855 | 10/10 |
| Example 12 | 970 | 855 | 10/10 |
| Example 13 | 980 | 860 | 10/10 |
| Comparative Example 1 | 300 | 80 | 8/10 |
| Comparative Example 2 | 540 | 160 | 10/10 |

As shown in Table 3, the lithium batteries according to Examples 1 to 13, due to containing the adhesives according to Preparation Examples 1 to 9, show improved initial adhesion and adhesive strength after high-temperature preservation. Further, the lithium batteries according to Examples 1 to 13 show improved impact stability.

By way of summation and review, as a secondary battery finds a wide range of applications in mobile devices, in various usage environments, devices using secondary batteries may be frequently dropped. **In** such cases, the batteries in the devices could be damaged by impact if the product is dropped, which could cause a short circuit, smoke formation, or combustion. Polymer batteries (due to using a pouch as an exterior material) could be easily deformed, and if dropped, electrode assemblies inside the pouch may be prone to large movements and collisions inside a battery case of a mobile device, thus easily causing a short circuit. Accordingly, the movement of electrode assemblies may be minimized and the electrode assemblies may be prevented from colliding inside a battery case, and a technology to integrate such electrode assemblies with the exterior material by applying an adhesive resin or a tape to the surface of a jelly-roll or a stack may be considered.

Some adhesive materials could fail to provide sufficient adhesive strength, and a material with reinforced adhesive strength may be desirable. The adhesion between a battery case and an electrode assembly may be carried out in the presence of an electrolyte, the adhesion between objects to be attached may be carried out with the adhesive having an organic solvent absorbed therein, and thus the adhesive material may have low electrolyte absorption properties and high adhesive properties. An adhesive material may have excellent adhesion-holding power at high temperatures, as well as excellent initial adhesion, which may allow battery stability to be maintained even after exposure to high-temperature environments.

According to an embodiment, an adhesive including a maleimide-modified polyolefin containing two or more acid functional groups may help improve high-temperature stability, and thus, a lithium battery including the adhesive may have

improved high-temperature stability between an electrode assembly and a battery case. The lithium battery may have improved impact strength and high-temperature stability.

One or more embodiments may provide a lithium battery including a modified polyolefin having excellent impact strength and high-temperature stability.

## Claims

1. A lithium battery (1, 10), comprising:

   an electrode assembly (100) including a cathode (3), an anode (2), and a separator (4) between the cathode (3) and the anode (2);
   a battery case (5) surrounding the electrode assembly (100); and
   an adhesive layer (200) between the electrode assembly (100) and the battery case (5), the adhesive layer (200) attaching the electrode assembly (100) and the battery case (5) to each other,
   **characterised in that**
   the adhesive layer (200) includes an adhesive including a maleimide-modified polyolefin containing two or more acid functional groups.

2. The lithium battery as claimed in claim 1, wherein an electrolyte absorption amount of the adhesive is 30 wt% or less, wherein the electrolyte absorption amount refers to the amount of an electrolyte absorbed after an adhesive is completely immersed in the electrolyte and preserved for 1 hour at 80 °C, and is calculated by Equation below:

   Electrolyte absorption amount (wt%) = (Weight of adhesive after immersion in electrolyte - Weight of adhesive before immersion in electrolyte) / (Weight of adhesive before immersion in electrolyte) * 100.

3. The lithium battery as claimed in claim 1 or 2, wherein the maleimide-modified polyolefin containing two or more acid functional groups has a weight average molecular weight (Mw) of 10,000 g/mol or more measured using gel permeation chromatography (GPC).

4. The lithium battery as claimed in any one of the preceding claims, wherein the maleimide-modified polyolefin containing two or more acid functional groups has a melting point ($T_m$) of 130 °C or less measured using differential scanning calorimetry (DSC).

5. The lithium battery as claimed in any one of the preceding claims, wherein the maleimide-modified polyolefin containing two or more acid functional groups is a reaction product between an amine compound containing two or more acid functional groups and a dicarboxylic acid anhydride-modified polyolefin.

6. The lithium battery as claimed in claim 5, wherein a maleimide unit in the maleimide-modified polyolefin containing two or more acid functional groups is a product of a dehydration reaction between an amine compound containing two or more acid functional groups and a dicarboxylic acid anhydride-modified polyolefin.

7. The lithium battery as claimed in claim 5, wherein an $\alpha,\beta$-unsaturated dicarboxylic acid in the dicarboxylic acid anhydride-modified polyolefin includes anhydrous maleic acid.

8. The lithium battery as claimed in claim 5, wherein a modified polyolefin in the dicarboxylic acid anhydride-modified polyolefin includes a polyethylene or a polypropylene.

9. The lithium battery as claimed in claim 5, wherein a content of polyolefin in the dicarboxylic acid anhydride-modified polyolefin is 50 mol% or more; and/or wherein a content of dicarboxylic acid anhydride in the $\alpha,\beta$-unsaturated dicarboxylic acid anhydride-modified polyolefin is 50 mol% or less.

10. The lithium battery as claimed in claim 5, wherein:
    the amine compound containing two or more acid functional groups is represented by Formula 1:

Formula 1

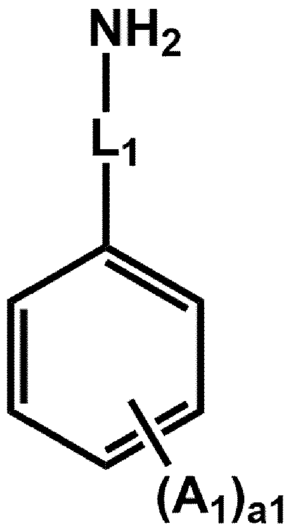

in Formula 1,

$L_1$ is a $C_1$-$C_{20}$ alkylene group, a $C_2$-$C_{20}$ alkeynylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group,
$A_1$ is a carboxylic acid group, a sulfonic acid group, or a phosphorus acid group, and
a1 is an integer of 2 to 5.

**11.** The lithium battery as claimed in claim 5, wherein:
the amine compound containing two or more acid functional groups is represented by one of Formulae 1-1 to 1-6:

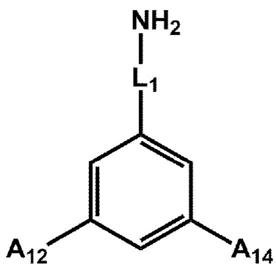

**1-1**

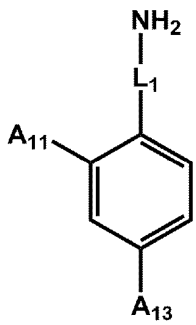

**1-2**

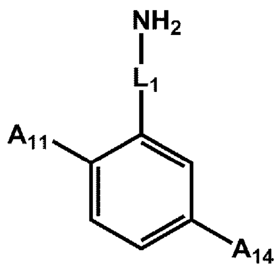

**1-3**

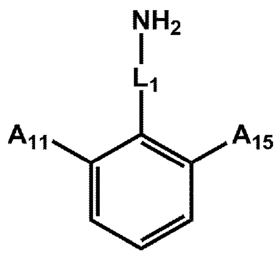

**1-4**

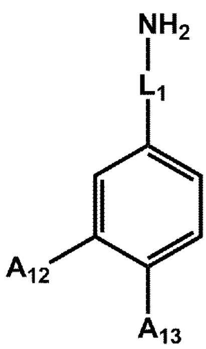

**1-5**

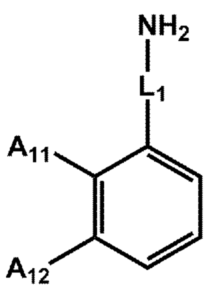

**1-6**

in Formulae 1-1 to 1-6,

$L_1$ is a $C_1$-$C_{20}$ alkylene group, a $C_2$-$C_{20}$ alkeynylene group, a $C_2$-$C_{20}$ alkynylene group, a $C_3$-$C_{10}$ cycloalkylene group, a $C_3$-$C_{10}$ cycloalkenylene group, or a $C_6$-$C_{30}$ arylene group, and
$A_{11}$ to $A_{15}$ are each independently a carboxylic acid group, a sulfonic acid group, or a phosphorus acid group.

**12.** The lithium battery as claimed in claim 11, wherein the amine compound containing two or more acid functional groups is represented by one of Formulae 1-1 to 1-4.

**13.** The lithium battery as claimed in any one of the preceding claims, wherein the adhesive layer (200) is on at least one surface of an upper surface and a lower surface of the electrode assembly (100); or

wherein the adhesive layer (200) is on an entire outer surface of the electrode assembly (100); or
wherein an area on which the adhesive layer (200) is disposed is 6 % or more with respect to a total area of an outer surface of the electrode assembly (100).

**14.** The lithium battery as claimed in any one of the preceding claims, wherein the adhesive layer (200) has a thickness of 1 μm to 10 μm.

**15.** The lithium battery as claimed in any one of the preceding claims, wherein the adhesive layer is on an outer surface of the electrode assembly in the form of a polygonal shape, a circular shape, an oval shape a straight-line, a diagonal curve a zig-zag line; or a combination thereof.

## Patentansprüche

**1.** Lithiumbatterie (1, 10), umfassend:

eine Elektrodenbaugruppe (100) mit einer Kathode (3), einer Anode (2) und einem Separator (4) zwischen der Kathode (3) und der Anode (2);
ein Batteriegehäuse (5), das die Elektrodenbaugruppe (100) umgibt; und
eine Klebeschicht (200) zwischen der Elektrodenbaugruppe (100) und dem Batteriegehäuse (5), wobei die Klebeschicht (200) die Elektrodenbaugruppe (100) und das Batteriegehäuse (5) aneinander befestigt,
**dadurch gekennzeichnet, dass**
die Klebeschicht (200) einen Klebstoff umfasst, der ein Maleimid-modifiziertes Polyolefin enthält, das zwei oder mehr Säurefunktionsgruppen enthält.

**2.** Lithiumbatterie nach Anspruch 1, wobei die Elektrolytabsorptionsmenge des Klebstoffs 30 Gew.-% oder weniger beträgt, wobei sich die Elektrolytabsorptionsmenge auf die Menge an Elektrolyt bezieht, die absorbiert wird, nachdem ein Klebstoff vollständig in den Elektrolyten eingetaucht und 1 Stunde lang bei 80°C gelagert wurde, und anhand der folgenden Gleichung berechnet wird: Elektrolytabsorptionsmenge (Gew.-%) = (Gewicht des Klebstoffs nach dem Eintauchen in den Elektrolyten - Gewicht des Klebstoffs vor dem Eintauchen in den Elektrolyten) / (Gewicht des Klebstoffs vor dem Eintauchen in den Elektrolyten) * 100.

**3.** Lithiumbatterie nach Anspruch 1 oder 2, wobei das Maleimid-modifizierte Polyolefin, das zwei oder mehr Säurefunktionsgruppen enthält, ein gewichtsmittleres Molekulargewicht (Mw) von 10.000 g/mol oder mehr aufweist, gemessen mittels Gelpermeationschromatographie (GPC).

**4.** Lithiumbatterie nach einem der vorstehenden Ansprüche, wobei das Maleimid-modifizierte Polyolefin, das zwei oder mehr Säurefunktionsgruppen enthält, einen Schmelzpunkt ($T_m$) von 130°C oder weniger aufweist, gemessen mittels Differential-Scanning-Kalorimetrie (DSC).

**5.** Lithiumbatterie nach einem der vorstehenden Ansprüche, wobei das Maleimid-modifizierte Polyolefin, das zwei oder mehr Säurefunktionsgruppen enthält, ein Reaktionsprodukt zwischen einer Aminverbindung, die zwei oder mehr Säurefunktionsgruppen enthält, und einem Dicarbonsäureanhydrid-modifizierten Polyolefin ist.

**6.** Lithiumbatterie nach Anspruch 5, wobei eine Maleimideinheit in dem Maleimidmodifizierten Polyolefin, das zwei oder mehr Säurefunktionsgruppen enthält, ein Produkt einer Dehydratisierungsreaktion zwischen einer Aminverbindung,

die zwei oder mehr Säurefunktionsgruppen enthält, und einem Dicarbonsäureanhydrid-modifizierten Polyolefin ist.

**7.** Lithiumbatterie nach Anspruch 5, wobei eine $\alpha,\beta$-ungesättigte Dicarbonsäure in dem Dicarbonsäureanhydrid-modifizierten Polyolefin wasserfreie Maleinsäure umfasst.

**8.** Lithiumbatterie nach Anspruch 5, wobei ein modifiziertes Polyolefin in dem Dicarbonsäureanhydrid-modifizierten Polyolefin ein Polyethylen oder ein Polypropylen umfasst.

**9.** Lithiumbatterie nach Anspruch 5, wobei der Gehalt an Polyolefin in dem Dicarbonsäureanhydrid-modifizierten Polyolefin 50 Mol-% oder mehr beträgt; und/oder wobei der Gehalt an Dicarbonsäureanhydrid in dem mit $\alpha,\beta$-ungesättigtem Dicarbonsäureanhydrid modifizierten Polyolefin 50 Mol-% oder weniger beträgt.

**10.** Lithiumbatterie nach Anspruch 5, wobei:
die Aminverbindung, die zwei oder mehr Säurefunktionsgruppen enthält, durch Formel 1 dargestellt wird:

Formel 1

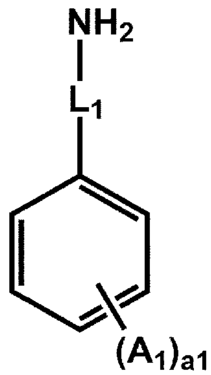

in Formel 1

$L_1$ eine $C_1$-$C_{20}$-Alkylengruppe, eine $C_2$-$C_{20}$-Alkenylengruppe, eine $C_2$-$C_{20}$-Alkinylengruppe, eine $C_3$-$C_{10}$-Cycloalkylengruppe, eine $C_3$-$C_{10}$-Cycloalkenylengruppe oder eine $C_6$-$C_{30}$-Arylengruppe ist,
$A_1$ eine Carbonsäuregruppe, eine Sulfonsäuregruppe oder eine Phosphorsäuregruppe und al eine ganze Zahl von 2 bis 5 ist.

**11.** Lithiumbatterie nach Anspruch 5, wobei:
die Aminverbindung, die zwei oder mehr Säurefunktionsgruppen enthält, durch eine der Formeln 1-1 bis 1-6 dargestellt wird:

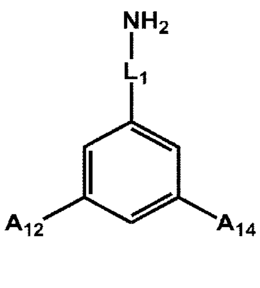

1-1

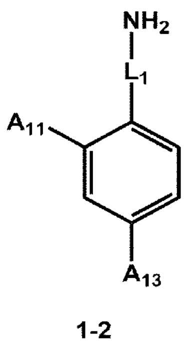

1-2

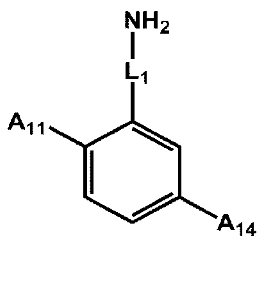

1-3

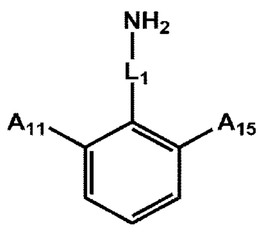

1-4

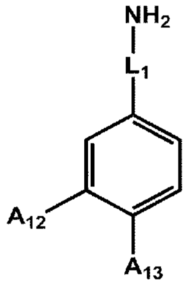

1-5

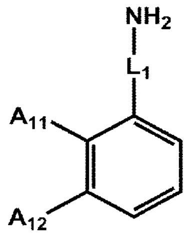

1-6

in den Formeln 1-1 bis 1-6

> $L_1$ eine $C_1$-$C_{20}$-Alkylengruppe, eine $C_2$-$C_{20}$-Alkenylengruppe, eine $C_2$-$C_{20}$-Alkinylengruppe, eine $C_3$-$C_{10}$-Cycloalkylengruppe, eine $C_3$-$C_{10}$-Cycloalkenylengruppe oder eine $C_6$-$C_{30}$-Arylengruppe ist und
> $A_{11}$ bis $A_{15}$ jeweils unabhängig voneinander eine Carbonsäuregruppe, eine Sulfonsäuregruppe oder eine Phosphorsäuregruppe sind.

**12.** Lithiumbatterie nach Anspruch 11, wobei die Aminverbindung, die zwei oder mehr Säurefunktionsgruppen enthält, durch eine der Formeln 1-1 bis 1-4 dargestellt wird.

**13.** Lithiumbatterie nach einem der vorstehenden Ansprüche, wobei sich die Klebeschicht (200) auf mindestens einer Oberfläche von einer oberen Oberfläche und einer unteren Oberfläche der Elektrodenbaugruppe (100) befindet; oder wobei sich die Klebeschicht (200) auf der gesamten Außenfläche der Elektrodenbaugruppe (100) befindet; oder wobei eine Fläche, auf der die Klebeschicht (200) angeordnet ist, 6% oder mehr der Gesamtfläche einer Außenfläche der Elektrodenbaugruppe (100) ausmacht.

**14.** Lithiumbatterie nach einem der vorstehenden Ansprüche, wobei die Klebeschicht (200) eine Dicke von 1 μm bis 10 μm aufweist.

**15.** Lithiumbatterie nach einem der vorstehenden Ansprüche, wobei die Klebeschicht auf einer Außenfläche der Elektrodenbaugruppe in Form einer polygonalen Form, einer kreisförmigen Form, einer ovalen Form, einer geraden Linie, einer diagonalen Kurve, einer Zickzacklinie oder einer Kombination davon angeordnet ist.

## Revendications

**1.** Batterie au lithium (1, 10) comprenant :

> un ensemble d'électrodes (100) comportant une cathode (3), une anode (2) et un séparateur (4) entre la cathode (3) et l'anode (2) ;
> un boîtier de batterie (5) encerclant l'ensemble d'électrodes (100) ; et
> une couche adhésive (200) entre l'ensemble d'électrodes (100) et le boîtier de batterie (5), la couche adhésive (200) fixant l'ensemble d'électrodes (100) et le boîtier de batterie (5) l'un à l'autre,
> **caractérisé en ce que**
> la couche adhésive (200) comporte un adhésif comportant une polyoléfine modifiée par maléimide contenant deux groupes fonctionnels acide ou plus.

**2.** Batterie au lithium selon la revendication 1, dans laquelle une quantité d'absorption d'électrolyte de l'adhésif est de 30 % en poids ou moins, dans laquelle la quantité d'absorption d'électrolyte fait référence à la quantité d'un électrolyte absorbé après qu'un adhésif est complètement immergé dans l'électrolyte et conservé pendant 1 heure à 80 °C, et est calculée par l'équation ci-dessous :
Quantité d'absorption d'électrolyte (% en poids) = (Poids d'adhésif après immersion dans l'électrolyte - Poids d'adhésif avant immersion dans l'électrolyte) / (Poids d'adhésif avant immersion dans l'électrolyte) * 100.

**3.** Batterie au lithium selon la revendication 1 ou 2, dans laquelle la polyoléfine modifiée par maléimide contenant deux groupes fonctionnels acide ou plus possède un poids moléculaire moyen en poids (Mw) de 10 000 g/mol ou plus

mesuré par chromatographie à perméation de gel (GPC).

**4.** Batterie au lithium selon l'une quelconque des revendications précédentes, dans laquelle la polyoléfine modifiée par maléimide contenant deux groupes fonctionnels acide ou plus possède un point de fusion ($T_m$) de 130 °C ou moins mesuré par calorimétrie différentielle à balayage (DSC).

**5.** Batterie au lithium selon l'une quelconque des revendications précédentes, dans laquelle la polyoléfine modifiée par maléimide contenant deux groupes fonctionnels acide ou plus est un produit de réaction entre un composé amine contenant deux groupes fonctionnels acide ou plus et une polyoléfine modifiée par anhydride d'acide dicarboxylique.

**6.** Batterie au lithium selon la revendication 5, dans laquelle une unité maléimide dans la polyoléfine modifiée par maléimide contenant deux groupes fonctionnels acide ou plus est un produit d'une réaction de dégradation entre un composé amine contenant deux groupes fonctionnels acide ou plus et une polyoléfine modifiée par anhydride d'acide dicarboxylique.

**7.** Batterie au lithium selon la revendication 5, dans laquelle un acide dicarboxylique $\alpha,\beta$-insaturé dans la polyoléfine modifiée par anhydride d'acide dicarboxylique comporte de l'acide maléique anhydre.

**8.** Batterie au lithium selon la revendication 5, dans laquelle une polyoléfine modifiée dans la polyoléfine modifiée par anhydride d'acide dicarboxylique comporte un polyéthylène ou un polypropylène.

**9.** Batterie au lithium selon la revendication 5, dans laquelle une teneur en polyoléfine dans la polyoléfine modifiée par anhydride d'acide dicarboxylique est de 50 % en moles ou plus ; et/ou dans laquelle une teneur en anhydride d'acide dicarboxylique dans la polyoléfine modifiée par anhydride d'acide dicarboxylique $\alpha,\beta$-insaturé est de 50 % en moles ou moins.

**10.** Batterie au lithium selon la revendication 5, dans laquelle :
le composé amine contenant deux groupes fonctionnels acide ou plus est représenté par la Formule 1 :

Formule 1

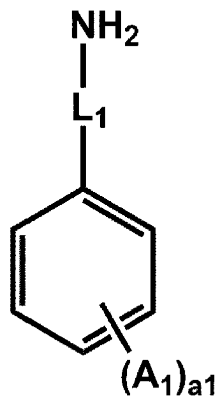

dans la Formule 1,

$L_1$ est un groupe alkylène en $C_1$ à $C_{20}$, un groupe alcénylène en $C_2$ à $C_{20}$, un groupe alcynylène en $C_2$ à $C_{20}$, un groupe cycloalkylène en $C_3$ à $C_{10}$, un groupe cycloalcénylène en $C_3$ à $C_{10}$, ou un groupe arylène en $C_6$ à $C_{30}$,
$A_1$ est un groupe acide carboxylique, un groupe acide sulfonique ou un groupe acide phosphorique, et
a1 est un nombre entier de 2 à 5.

**11.** Batterie au lithium selon la revendication 5, dans laquelle :
le composé amine contenant deux groupes fonctionnels acide ou plus est représenté par l'une des Formules 1-1 à 1-6 :

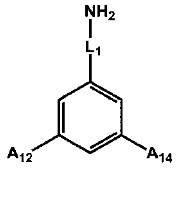

1-1

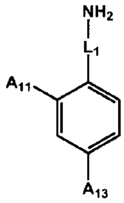

1-2

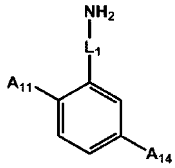

1-3

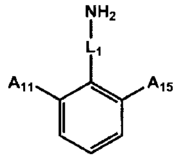

1-4

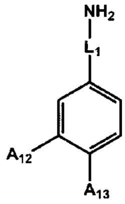

1-5

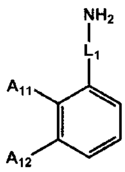

1-6

dans les Formules 1-1 à 1-6,

$L_1$ est un groupe alkylène en $C_1$ à $C_{20}$, un groupe alcénylène en $C_2$ à $C_{20}$, un groupe alcynylène en $C_2$ à $C_{20}$, un groupe cycloalkylène en $C_3$ à $C_{10}$, un groupe cycloalcénylène en $C_3$ à $C_{10}$, ou un groupe arylène en $C_6$ à $C_{30}$, et $A_{11}$ à $A_{15}$ sont chacun indépendamment un groupe acide carboxylique, un groupe acide sulfonique ou un groupe acide phosphorique.

**12.** Batterie au lithium selon la revendication 11, dans laquelle le composé amine contenant deux groupes fonctionnels acide ou plus est représenté par l'une des Formules 1-1 à 1-4.

**13.** Batterie au lithium selon l'une quelconque des revendications précédentes, dans laquelle la couche adhésive (200) est sur au moins une surface parmi une surface supérieure et une surface inférieure de l'ensemble d'électrodes (100) ; ou

dans laquelle la couche adhésive (200) est sur la totalité d'une surface externe de l'ensemble d'électrodes (100) ; ou

dans laquelle une aire sur laquelle la couche adhésive (200) est disposée est de 6 % ou plus par rapport à une aire totale d'une surface externe de l'ensemble d'électrodes (100).

**14.** Batterie au lithium selon l'une quelconque des revendications précédentes, dans laquelle la couche adhésive (200) possède une épaisseur de 1 $\mu$m à 10 $\mu$m.

**15.** Batterie au lithium selon l'une quelconque des revendications précédentes, dans laquelle la couche adhésive est sur une surface externe de l'ensemble d'électrodes sous la forme d'une géométrie polygonale, d'une géométrie circulaire, d'une géométrie ovale, d'une ligne droite, d'une courbe diagonale, d'une ligne en zigzag ; ou d'une combinaison de celles-ci.

FIG. 1

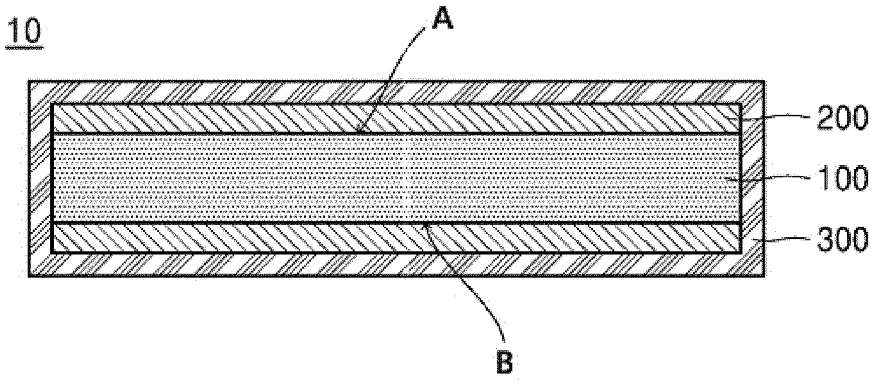


FIG. 2

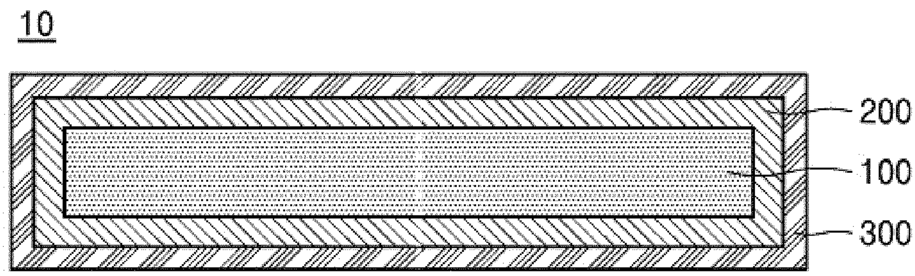

FIG. 3

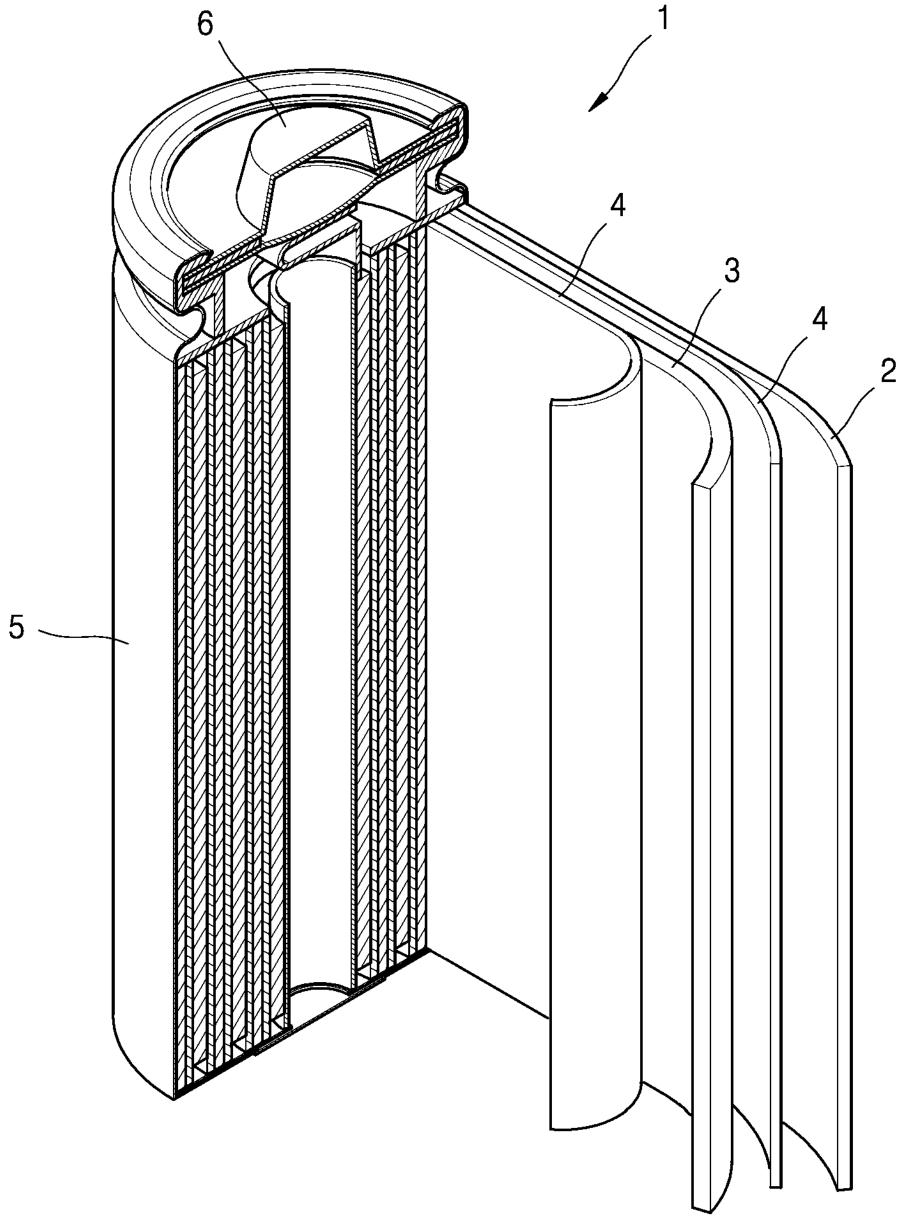

FIG. 4

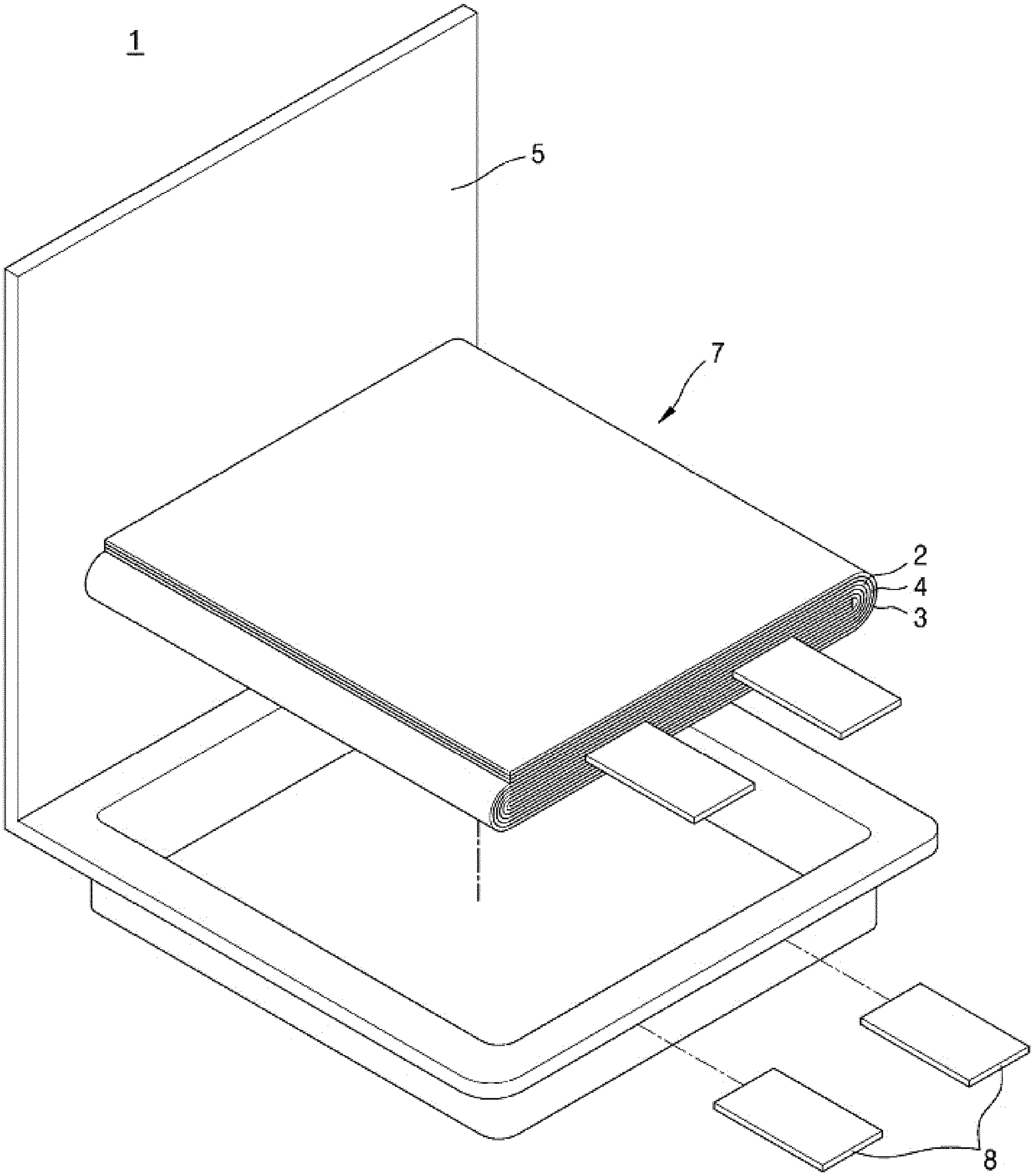

FIG. 5

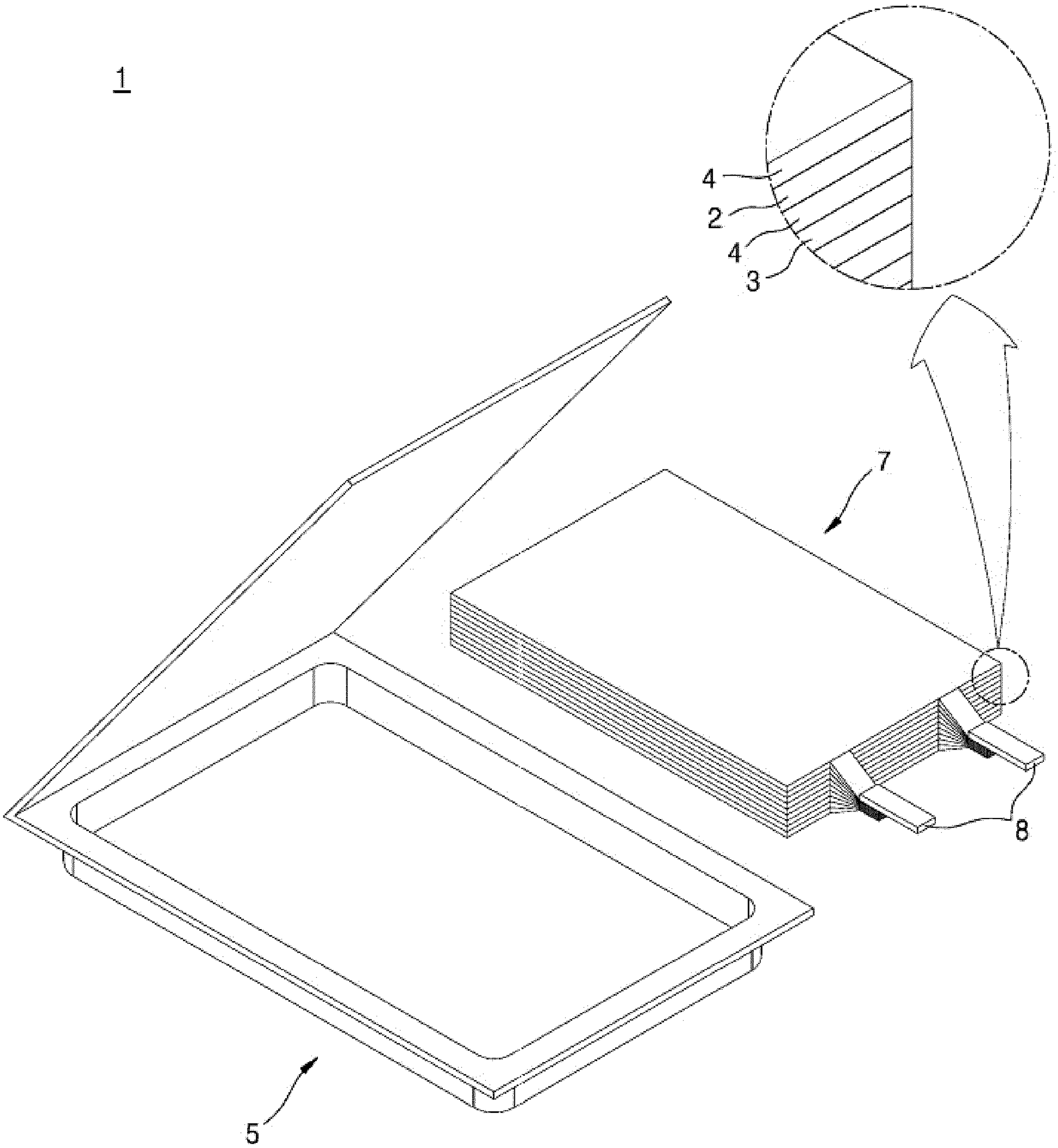

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004045597 A1
- US 2016237311 A1
- JP 2014197541 A
- KR 20200005037 A